# EUROPEAN PATENT APPLICATION

(11) **EP 4 480 981 A1**
(43) Date of publication of application: **25.12.2024**
(21) Application number: 23756332.5
(22) Date of filing: 13.02.2023
(51) Int. Cl.: C08G 18/65, C08G 18/00, C08G 18/08, C08G 18/10, C08G 18/44, D06N 3/14

(54) **POLYURETHANE RESIN COMPOSITION, ARTIFICIAL LEATHER, SYNTHETIC LEATHER, AND LEATHER SURFACE TREATMENT AGENT**

(30) Priority: 15.02.2022 JP 2022020924
(71) Applicant: Tosoh Corporation, Yamaguchi 746-8501 (JP)
(72) Inventor: HONDA, Kohei, Yokkaichi-shi, Mie 510-8540 (JP); ANZAI, Hironao, Yokkaichi-shi, Mie 510-8540 (JP)
(74) Representative: TBK
(86) International application number: PCT/JP2023/004835
(87) International publication number: WO 2023/157807

(57) **Abstract**

A polyurethane resin composition containing an isocyanate-terminated urethane prepolymer (E) or a reaction product of an isocyanate-terminated urethane prepolymer (E) and a chain extender (G), and a neutralizing agent (F), wherein the isocyanate-terminated urethane prepolymer (E) includes a reaction product of: a polyol (A1) including a polycarbonate polyol (B1) having an ester bond and an average hydroxyl group functionality of more than 2; an organic acid (C); and a polyisocyanate (D), and wherein the content of the polycarbonate polyol (B1) or the content of urea groups derived from the chain extender (G) satisfies a specific condition.

## Description

### [Technical Field]

The present disclosure relates to a polyurethane resin composition, artificial leather, synthetic leather, and a surface treatment agent for leather.

### [Background Art]

Polycarbonate-based polyurethane resin compositions are used for artificial leather, synthetic leather, natural leather, and the like because they are advantageous in hydrolysis resistance, heat resistance, abrasion resistance, chemical resistance, and the like.

PLT 1 discloses a method for producing a polyurethane emulsion for an aqueous one-component coating agent, which includes: producing a carboxyl group-containing isocyanate-terminated urethane prepolymer (A) by reacting an organic diisocyanate (a1), a polymer polyol (a2) having a carbonate skeleton, and a carboxyl group-containing low molecular weight glycol (a3); mixing the prepolymer (A) with a nonionic polar group-containing polyisocyanate (B); neutralizing the carboxyl groups in the system with a neutralizing agent (C); and then emulsifying the mixture in water and subjecting it to a chain extension reaction with water.

### [Citation List]

### [Patent Literature]

[PTL 1] Japanese Unexamined Patent Application Publication No. 2005-247897

### [Summary of Invention]

### [Technical Problem]

However, the polyurethane emulsion according to PLT 1 cannot achieve balanced mechanical properties compared to solvent-based polyurethane resins, and there is a need to improve the 100% modulus. Further, the polyurethane emulsion according to PLT 1 has insufficient shape stability when exposed to a high-temperature environment.

Accordingly, an aspect of the present disclosure is directed to providing a polyurethane resin composition having a low 100% modulus and a high softening temperature, artificial leather, synthetic leather, and a surface treatment agent for leather.

### [Solution to Problem]

Each aspect of the present disclosure includes the following embodiments.
(1) A polyurethane resin composition containing:
   a reaction product of an isocyanate-terminated urethane prepolymer (E) and a chain extender (G); and
   a neutralizing agent (F), wherein
   the isocyanate-terminated urethane prepolymer (E) includes
   a reaction product of:
      a polyol (A1) including a polycarbonate polyol (B1) having an ester bond and an average hydroxyl group functionality of more than 2;
      an organic acid (C); and
      a polyisocyanate (D), or
   a reaction product of:
      a polyol (A2);
      a polyfunctional polyol (B2) different from the polyol (A2);
      an organic acid (C); and
      a polyisocyanate (D),
      the polyfunctional polyol (B2) being a polycarbonate polyol having an ester bond and an average hydroxyl group functionality of more than 2, and wherein
   in the polyurethane resin composition, a content of urea groups derived from the chain extender (G) is 0.05 to 1.00 mmol/g with respect to a total sum of a mass of the isocyanate-terminated urethane prepolymer (E) and a mass of the chain extender (G).
(2) The polyurethane resin composition according to (1), wherein the polyurethane resin composition contains:
   a reaction product of an isocyanate-terminated urethane prepolymer (E) and a chain extender (G); and
   a neutralizing agent (F), wherein
   the isocyanate-terminated urethane prepolymer (E) includes
   a reaction product of:
      a polyol (A2);
      a polyfunctional polyol (B2) different from the polyol (A2);
      an organic acid (C); and
      a polyisocyanate (D),
      the polyfunctional polyol (B2) being a polycarbonate polyol having an ester bond and an average hydroxyl group functionality of more than 2, and wherein
   in the polyurethane resin composition, the content of the urea groups derived from the chain extender (G) is 0.05 to 1.00 mmol/g with respect to the total sum of the mass of the isocyanate-terminated urethane prepolymer (E) and the mass of the chain extender (G).
(3) The polyurethane resin composition according to (1) or (2), wherein the chain extender (G) is one or more selected from the group consisting of: an amine compound having one or more primary or secondary amino groups; and water.
(4) The polyurethane resin composition according to any one of (1) to (3), wherein the chain extender (G) includes an amine compound having one or more primary or secondary amino groups, and wherein in the polyurethane resin composition, a content of urea groups derived from the amine compound is more than 0 mmol/g and 0.95 mmol/g or less with respect to the total sum of the mass of the isocyanate-terminated urethane prepolymer (E) and the mass of the chain extender (G).
(5) The polyurethane resin composition according to any one of (1) to (4), wherein the chain extender (G) includes an amine compound having one or more primary or secondary amino groups, and wherein in the polyurethane resin composition, the content of the urea groups derived from the amine compound is more than 0 mol% and 99 mol% or less with respect to the content of the urea groups derived from the chain extender (G).
(6) The polyurethane resin composition according to any one of (1) to (5), wherein the chain extender (G) includes water, and wherein in the polyurethane resin composition, a content of urea groups derived from the water is more than 0 mmol/g and 0.95 mmol/g or less with respect to the total sum of the mass of the isocyanate-terminated urethane prepolymer (E) and the mass of the chain extender (G).
(7) The polyurethane resin composition according to any one of (1) to (6), further containing a curing agent (X).
(8) The polyurethane resin composition according to any one of (1) to (7), wherein a content of the polycarbonate polyol (B1) is 5 to 99 mass% with respect to a content of the polyol (A1), or a content of the polyfunctional polyol (B2) is 5 to 99 mass% with respect to a total sum of a content of the polyol (A2) and the content of the polyfunctional polyol (B2).
(9) A polyurethane resin composition containing:
   an isocyanate-terminated urethane prepolymer (E); and
   a neutralizing agent (F), wherein
   the isocyanate-terminated urethane prepolymer (E) includes
   a reaction product of:
      a polyol (A1) including a polycarbonate polyol (B1) having an ester bond and an average hydroxyl group functionality of more than 2;
      an organic acid (C); and
      a polyisocyanate (D), or
   a reaction product of:
      a polyol (A2);
      a polyfunctional polyol (B2) different from the polyol (A2);
      an organic acid (C); and
      a polyisocyanate (D),
      the polyfunctional polyol (B2) being a polycarbonate polyol having an ester bond and an average hydroxyl group functionality of more than 2, and wherein
   a content of the polycarbonate polyol (B1) is 40 to 99 mass% with respect to a content of the polyol (A1).
(10) The polyurethane resin composition according to (9), wherein the polyurethane resin composition contains:
   an isocyanate-terminated urethane prepolymer (E); and
   a neutralizing agent (F), wherein
   the isocyanate-terminated urethane prepolymer (E) includes
   a reaction product of:
      a polyol (A2);
      a polyfunctional polyol (B2) different from the polyol (A2);
      an organic acid (C); and
      a polyisocyanate (D),
      the polyfunctional polyol (B2) being a polycarbonate polyol having an ester bond and an average hydroxyl group functionality of more than 2, and wherein
   a content of the polyfunctional polyol (B2) is 40 to 99 mass% with respect to a total sum of a content of the polyol (A2) and the content of the polyfunctional polyol (B2) .
(11) The polyurethane resin composition according to any one of (1) to (10), wherein an average hydroxyl value of the polyol (A1) including the polycarbonate polyol (B1) is 30 to 150 mgKOH/g, or an average hydroxyl value of the polyol (A2) and the polyfunctional polyol (B2) is 30 to 150 mgKOH/g.
(12) The polyurethane resin composition according to any one of (1) to (11), wherein the polycarbonate polyol (B1) or the polyfunctional polyol (B2) includes a transesterification reaction product of: a polycarbonate polyol (b-1); and a polyester polyol (b-2) having an average hydroxyl group functionality of 3 or more, or includes a transesterification reaction product of: a polycarbonate polyol (b-1); a polyester polyol (b-2) having an average hydroxyl group functionality of 3 or more; and a polyester polyol (b-3) having an average hydroxyl group functionality of 2 or more and less than 3.
(13) The polyurethane resin composition according to (12), wherein an average hydroxyl group functionality of the polycarbonate polyol (B1) or the polyfunctional polyol (B2) is 2.1 to 3.5; a hydroxyl value of the polycarbonate polyol (B1) or the polyfunctional polyol (B2) is 40 to 500 mgKOH/g; a number average molecular weight of the polycarbonate polyol (B1) or the polyfunctional polyol (B2) is 400 to 4,000 g/mol ; and a mass ratio of the polycarbonate polyol (b-1) to the polyester polyol (b-2) ([mass of (b-1)]/[mass of (b-2)]) is 90/10 to 10/90, or a mass ratio of the polycarbonate polyol (b-1) to a total sum of the polyester polyol (b-2) and the polyester polyol (b-3) ([mass of (b-1)]/([mass of (b-2)]+[mass of (b-3)])) is 95/5 to 5/95.
(14) The polyurethane resin composition according to any one of (1) to (13), wherein an ester group concentration of the polycarbonate polyol (B1) or the polyfunctional polyol (B2) is 10 to 90 mass%.
(15) The polyurethane resin composition according to any one of (1) to (14), wherein the organic acid (C) is a dimethylol fatty acid.
(16) The polyurethane resin composition according to any one of (1) to (15), wherein the neutralizing agent (F) is a basic neutralizing agent.
(17) The polyurethane resin composition according to any one of (1) to (16), wherein the polyol (A1) includes a diol (A-2) and/or a polyhydric alcohol (A-3) having a functionality of 3 or more, or the polyol (A2) includes a diol (A-2) and/or a polyhydric alcohol (A-3) having a functionality of 3 or more.
(18) A cured product obtained by curing the polyurethane resin composition according to any one of (1) to (17).
(19) Artificial leather or synthetic leather containing the cured product according to (18).
(20) A surface treatment agent for leather containing the polyurethane resin composition according to any one of (1) to (17).

### [Advantageous Effects of Invention]

According to an aspect of the present disclosure, it is possible to provide a polyurethane resin composition having a low 100% modulus and a high softening temperature, artificial leather, synthetic leather, and a surface treatment agent for leather.

### [Description of Embodiments]

Exemplary embodiments for carrying out each aspect of the present disclosure will be described in further detail. However, the present disclosure is not limited to the following embodiments.

In the present specification, numerical ranges indicated using "to" include the values stated before and after "to" as the minimum and maximum values of the range, respectively. In the numerical ranges described in the present specification, the upper limit value or the lower limit value of the numerical range may be replaced with the value shown in the examples. Further, the individually described upper limit values and lower limit values can be combined as desired.

The polyurethane resin composition according to the first aspect of the present disclosure contains:
a reaction product of an isocyanate-terminated urethane prepolymer (E) and a chain extender (G); and
a neutralizing agent (F), wherein
the isocyanate-terminated urethane prepolymer (E) includes
a reaction product of:
   a polyol (A1) including a polycarbonate polyol (B1) having an ester bond and an average hydroxyl group functionality of more than 2;
   an organic acid (C); and
   a polyisocyanate (D), and wherein
in the polyurethane resin composition, a content of urea groups derived from the chain extender (G) is 0.05 to 1.00 mmol/g with respect to a total sum of a mass of the isocyanate-terminated urethane prepolymer (E) and a mass of the chain extender (G).

The polyurethane resin composition according to a modification of the first aspect of the present disclosure contains:
a reaction product of an isocyanate-terminated urethane prepolymer (E) and a chain extender (G); and
a neutralizing agent (F), wherein
the isocyanate-terminated urethane prepolymer (E) includes
a reaction product of:
   a polyol (A2);
   a polyfunctional polyol (B2) different from the polyol (A2);
   an organic acid (C); and
   a polyisocyanate (D),
   the polyfunctional polyol (B2) being a polycarbonate polyol having an ester bond and an average hydroxyl group functionality of more than 2, and wherein
in the polyurethane resin composition, the content of the urea groups derived from the chain extender (G) is 0.05 to 1.00 mmol/g with respect to the total sum of the mass of the isocyanate-terminated urethane prepolymer (E) and the mass of the chain extender (G).

The polyurethane resin composition according to the second aspect of the present disclosure contains:
an isocyanate-terminated urethane prepolymer (E); and
a neutralizing agent (F), wherein
the isocyanate-terminated urethane prepolymer (E) includes
a reaction product of:
   a polyol (A1) including a polycarbonate polyol (B1) having an ester bond and an average hydroxyl group functionality of more than 2;
   an organic acid (C); and
   a polyisocyanate (D), and wherein
a content of the polycarbonate polyol (B1) is 40 to 99 mass% with respect to a content of the polyol (A1).

The polyurethane resin composition according to a modification of the second aspect of the present disclosure contains:
an isocyanate-terminated urethane prepolymer (E); and
a neutralizing agent (F), wherein
the isocyanate-terminated urethane prepolymer (E) includes
a reaction product of:
   a polyol (A2);
   a polyfunctional polyol (B2) different from the polyol (A2);
   an organic acid (C); and
   a polyisocyanate (D),
   the polyfunctional polyol (B2) being a polycarbonate polyol having an ester bond and an average hydroxyl group functionality of more than 2, and wherein
a content of the polyfunctional polyol (B2) is 40 to 99 mass% with respect to a total sum of a content of the polyol (A2) and the content of the polyfunctional polyol (B2) .

In the following, when simply referred to as "polyurethane resin composition," this "polyurethane resin composition" includes both the polyurethane resin composition according to the first aspect and a modification thereof, and the polyurethane resin composition according to the second aspect and a modification thereof.

Hereinafter, components (A) to (F), (G), and other components that may be contained in addition to these will be described.

### <Polyol (A1) and Polyol (A2)>

Polyol (A1) includes a polycarbonate polyol (B1) having an ester bond and an average hydroxyl group functionality of more than 2. Examples of the polyol other than the polycarbonate polyol (B1) included in the polyol (A1) include a polyol (A-1) of a polyester polyol, a polyether polyol, a polycarbonate polyol (excluding polycarbonate polyol (B1)), a polyolefin polyol, and any combination of two or more thereof.

Examples of the polyol (A2) include a polyol (A-1) of a polyester polyol, a polyether polyol, a polycarbonate polyol (excluding polyfunctional polyol (B2)), a polyolefin polyol, and any combination of two or more thereof.

The polyester polyol is preferably a polyester polyol (polyester diol) obtained from a diol with a dicarboxylic acid and/or an anhydride thereof, a polyester polyol (polyester diol) obtained by ring-opening addition polymerization of a cyclic ester compound such as lactones using a diol as an initiator, a polyester polyol obtained from a polyhydric alcohol having a functionality of 3 or more and a diol with a dicarboxylic acid and/or an anhydride thereof, a polyester polyol obtained by ring-opening addition polymerization of a cyclic ester compound such as lactones using a polyhydric alcohol having a functionality of 3 or more and optionally a diol as an initiator, and any combination of two or more thereof.

Examples of the diol include low molecular weight polyols such as ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylolheptane, diethylene glycol, dipropylene glycol, neopentyl glycol, cyclohexane-1,4-diol, cyclohexane-1,4-dimethanol, dimer acid diol, ethylene oxide or propylene oxide adducts of bisphenol A, bis(β-hydroxyethyl)benzene, and xylylene glycol, and any combination of two or more thereof.

Examples of the polyhydric alcohol having a functionality of 3 or more include trimethylolpropane, trimethylolethane, glycerin, pentaerythritol, dipentaerythritol, sorbitol, and the like, and any combination of any two thereof. Among these, trimethylolpropane, trimethylolethane, and pentaerythritol are preferred.

Examples of the dicarboxylic acid and/or the anhydride thereof include phthalic acid, isophthalic acid, terephthalic acid, tetrahydrophthalic acid, hexahydrophthalic acid, cyclohexanedicarboxylic acid, maleic acid, fumaric acid, oxalic acid, malonic acid, succinic acid, glutaric acid, adipic acid, pimelic acid, suberic acid, sebacic acid, dodecanedioic acid, hydrogenated dimer fatty acid, tartaric acid, and the like, and anhydrides thereof, and any combination of two or more thereof.

Examples of the cyclic ester compound include β-propiolactone, β-butyrolactone, γ-butyrolactone, β-valerolactone, γ-valerolactone, δ-valerolactone, α-caprolactone, β-caprolactone, γ-caprolactone, δ-caprolactone, ε-caprolactone, α-methyl-ε-caprolactone, β-methyl-ε-caprolactone, 4-methylcaprolactone, γ-caprylolactone, ε-caprylolactone, ε-palmitolactone, and the like, and any combination of two or more thereof. Among these, a ring-opening addition polymer of ε-caprolactone using ethylene glycol, 1,3-propanediol, 1,4-butanediol, 1,5-pentanediol, 1,6-hexanediol, 1,9-nonanediol, 3-methyl-1,5-pentanediol, 2-methyl-1,8-octanediol, or the like as an initiator is preferred from the viewpoints of stability and economy during polymerization.

Examples of the polyether polyol include polyethylene glycol, polypropylene ether polyol, polytetramethylene ether polyol, and the like, and any combination of two or more thereof.

Examples of the polycarbonate polyol include the following polycarbonate polyols (α), (β), (γ), the following polycarbonate polyols (α'), (β'), and any combination of two or more thereof. The polycarbonate polyol included in the polyol (A-1) is different from the polycarbonate polyol (B1) and the polyfunctional polyol (B2) .
(α) Polycarbonate polyol (hereinafter also referred to as "polycarbonate polyol (α)") obtained from a diol (a-1) and a carbonic acid ester (a-2)
(β) Polycarbonate polyol (hereinafter also referred to as "polycarbonate polyol (β)") obtained from a diol (a-1), a carbonic acid ester (a-2), and a cyclic ester compound (a-3) such as lactones
(γ) Polycarbonate polyol (hereinafter also referred to as "polycarbonate polyol (γ)") obtained from a polycarbonate polyol (a-4) and a polyester polyol (a-5)
(α') Polycarbonate polyol (hereinafter also referred to as "polycarbonate polyol (α')") that is a transesterification reaction product of a diol (a-1), a polyhydric alcohol (a-6) having a functionality of 3 or more, and a carbonic acid ester (a-2)
(β') Polycarbonate polyol (hereinafter also referred to as "polycarbonate polyol (β')") that is a transesterification reaction product of a polyhydric alcohol (a-6) having a functionality of 3 or more, optionally a diol (a-1), and a polycarbonate polyol (a-7)

Examples of the diol (a-1) include the same diols as those listed in the description of the polyester polyol. Among these, ethylene glycol, 1,3-propanediol, 1,4-butanediol, 1,5-pentanediol, 1,6-hexanediol, 1,9-nonanediol, 3-methyl-1,5-pentanediol, and 2-methyl-1,8-octanediol are preferred.

Examples of the carbonic acid ester (a-2) include dialkyl carbonates such as dimethyl carbonate and diethyl carbonate; alkylene carbonates such as ethylene carbonate and propylene carbonate; diaryl carbonates such as diphenyl carbonate, dinaphthyl carbonate, dianthryl carbonate, diphenanthryl carbonate, diindanyl carbonate, and tetrahydronaphthyl carbonate; and the like, and any combination of two or more thereof.

Examples of the cyclic ester compound (a-3) include the same cyclic ester compounds as those listed in the description of the polyester polyol.

Examples of the polycarbonate polyol (a-4) include the same polycarbonate polyols as those listed in the description of the polycarbonate polyol (α).

Examples of the polyester polyol (a-5) include the same polyester polyols (polyester diols) as those listed in the description of the polyester polyol.

Examples of the polyhydric alcohol (a-6) include the same polyhydric alcohols as those listed in the description of the polyester polyol. Among these, trimethylolpropane, trimethylolethane, and pentaerythritol are preferred.

Polycarbonate polyol (a-7) is a polycarbonate polyol having a functionality of 2 or more, may be a polycarbonate polyol (a-7-1) having a functionality of 2, may be a polycarbonate polyol (a-7-2) having a functionality of 3 or more, or may be a combination of two or more selected from polycarbonate polyol (a-7-1) and polycarbonate polyol (a-7-2) .

Examples of the polycarbonate polyol (a-7-1) include the same polycarbonate polyols as those listed in the description of the polycarbonate polyol (α).

Examples of the polycarbonate polyol (a-7-2) include the same polycarbonate polyols as those listed in the description of the polycarbonate polyol (α').

Examples of the polyolefin polyol include hydroxyl-terminated polybutadiene and hydrogenated products thereof, hydroxyl group-containing chlorinated polyolefins, and the like, and any combination of two or more thereof.

In consideration of various durability and adhesion of the coating film obtained from the polyurethane resin composition, the polyol (A-1) preferably includes a polycarbonate polyol, and more preferably includes a polycarbonate diol.

The number average molecular weight of the polyol (A-1) is preferably 300 to 10,000, may be 500 to 7,000, may be 800 to 5,000, or may be 1000 to 3,000. Details of the method for measuring the number average molecular weight may be as described in the Examples described later.

The average hydroxyl value of the polyol (A-1) is preferably 30 to 500 mgKOH/g, more preferably 40 to 400 mgKOH/g, and even more preferably 50 to 300 mgKOH/g. When the average hydroxyl value is 30 mgKOH/g or more, the urethane group concentration in the polyurethane resin does not become too low, and the strength at break in the tensile test is further improved. When the average hydroxyl value is 500 mgKOH/g or less, the urethane group concentration does not become too high, and the elongation at break in the tensile test is further improved.

Polyol (A1) may include a diol (A-2) and/or a polyhydric alcohol (A-3) having a functionality of 3 or more in addition to or instead of polyol (A-1) as a polyol other than polycarbonate polyol (B1).

Polyol (A2) may include a diol (A-2) and/or a polyhydric alcohol (A-3) having a functionality of 3 or more in addition to or instead of polyol (A-1). The diol (A-2) and the polyhydric alcohol (A-3) are different from the polyol (A-1).

Examples of the diol (A-2) include the same diols as those listed in the description of the polyester polyol. Among these, ethylene glycol, 1,3-propanediol, 1,4-butanediol, 1,5-pentanediol, 1,6-hexanediol, 1,8-octanediol, 1,9-nonanediol, and 2-methyl-1,8-octanediol are preferred.

Examples of the polyhydric alcohol (A-3) include the same polyhydric alcohols as those listed in the description of the polyester polyol. Among these, trimethylolpropane, trimethylolethane, and pentaerythritol are preferred from the economic viewpoint.

The molar ratio of the polyol (A-1) to the diol (A-2) and/or the polyhydric alcohol (A-3) in the polyol (A1) and the polyol (A2) [polyol (A-1)/(diol (A-2) and/or polyhydric alcohol (A-3)] is preferably 10/0 to 1/20, more preferably 10/0 to 1/10, and even more preferably 7/1 to 1/5. By setting the molar ratio within this range, a polyurethane resin composition having a further lower 100% modulus and a further higher softening temperature can be obtained.

### <Polycarbonate Polyol (B1)and Polyfunctional Polyol (B2)>

In the first aspect and the second aspect, the polycarbonate polyol (B1) is a polycarbonate polyol having an ester bond and an average hydroxyl group functionality of more than 2. Further, the polycarbonate polyol (B1) is included in the polyol (A1).

In the modification of the first aspect and the modification of the second aspect, the polyfunctional polyol (B2) is different from the polyol (A2) and is a polycarbonate polyol having an ester bond and an average hydroxyl group functionality of more than 2.

Examples of the polycarbonate polyol (B1) and the polyfunctional polyol (B2) include the following copolymer polyols (α") and (β"), and any combination of two or more thereof.
(α") Copolymer polyol (hereinafter also referred to as "polycarbonate polyol (α")") that is a transesterification reaction product of a polycarbonate polyol (b-1) and a polyester polyol (b-2) having an average hydroxyl group functionality of 3 or more
(β") Copolymer polyol (hereinafter also referred to as "polycarbonate polyol (β")") that is a transesterification reaction product of a polycarbonate polyol (b-1), a polyester polyol (b-2) having an average hydroxyl group functionality of 3 or more, and a polyester polyol (b-3) having an average hydroxyl group functionality of 2 or more and less than 3

The copolymer polyol achieves both high strength and high elongation mechanical properties, and also has improved solubility in solvents, improved handling properties due to liquefaction at room temperature, and the like.

Examples of the polycarbonate polyol (b-1) include the same polycarbonate polyols as those listed in the description of the polycarbonate polyol (a-7).

Examples of the polyester polyol (b-2) include the following polyester polyols (δ) and (ε), and any combination of two or more thereof.
(δ) Polyester polyol (hereinafter also referred to as "polyester polyol (δ)") obtained from a diol (b-2-1), a dicarboxylic acid and/or an anhydride thereof (b-2-2), and a polyhydric alcohol (b-2-3) having an average hydroxyl group functionality of 3 or more
(ε) Polyester polyol (hereinafter also referred to as "polyester polyol (ε)") obtained by ring-opening addition polymerization of a cyclic ester compound (b-2-4) such as lactones using a polyhydric alcohol (b-2-3) having an average hydroxyl group functionality of 3 or more and optionally a bifunctional alcohol (b-2-5) as initiators

Examples of the diol (b-2-1), the dicarboxylic acid and/or the anhydride thereof (b-2-2), and the cyclic ester compound (b-2-4) include the same diols, dicarboxylic acids and/or anhydrides thereof, and cyclic ester compounds as those listed in the description of the polyester polyol.

Examples of the polyhydric alcohol (b-2-3) include the same polyhydric alcohols having a functionality of 3 or more as those listed in the description of the polyester polyol. As long as the intended effect is achieved, a bifunctional alcohol (b-2-5) such as ethylene glycol, diethylene glycol, propylene glycol, butanediol, neopentyl glycol, hexamethylene glycol, dipropylene glycol, or trimethylene glycol may be used as an initiator in combination with the polyhydric alcohol (b-2-3). In other words, the polyester polyol (ε) may be a polyester polyol having a moiety derived from the polyhydric alcohol (b-2-3) and a moiety derived from the cyclic ester compound (b-2-4), and in addition, may further include a polyester polyol having a moiety derived from the bifunctional alcohol (b-2-5) and a moiety derived from the cyclic ester compound (b-2-4) .

### (Catalyst)

It is preferable to use a catalyst in the production of the polycarbonate polyol (B1) and the polyfunctional polyol (B2). Examples of the catalyst include known transesterification catalysts, such as metal alkoxides such as lithium methoxide, sodium methoxide, sodium ethoxide, potassium methoxide, and potassium ethoxide; metal enolates such as lithium acetylacetonate, aluminum acetylacetonate, and zirconium acetylacetonate; metal carbonates such as lithium carbonate, sodium carbonate, and potassium carbonate; metal hydroxides such as lithium hydroxide, sodium hydroxide, and potassium hydroxide; metal carboxylates such as lithium acetate, sodium acetate, and potassium acetate; tertiary alkylamines such as trimethylamine, triethylamine, diisopropylethylamine, and tributylamine; cyclic azines such as pyridine, pyrazine, and quinoline; tertiary cyclic amines such as N-methylpyrrolidine, N-methylpiperidine, N,N'-dimethylpiperazine, N-methylmorpholine, diazabicycloundecene, 1,4-diazabicyclo[2.2.2]octane, and 1,8-diazabicyclo[5.4.0]undecene; phosphazenes such as t-butylimino-tris(dimethylamino)phosphorane (P1-t-Bu), t-butylimino-tri(pyrrolidino)phosphorane, t-octylimino-tris(dimethylamino)phosphorane (P1-t-Oct), 1-t-butyl-2,2,4,4,4-pentakis(dimethylamino)-2λ⁵,4λ⁵-catenadi(phosphazene) (P2-t-Bu), 1-ethyl-2,2,4,4,4-pentakis(dimethylamino)-2λ⁵,4λ⁵-catenadi(phosphazene), 1-t-butyl-4,4,4-tris(dimethylamino)-2,2-bis [tris (dimethylamino) phosphoranylideneamino] -2λ⁵,4λ⁵-catenadi(phosphazene) (P4-t-Bu), and 1-tert-octyl-4,4,4-tris(dimethylamino)-2,2-bis[tris(dimethylamino)phosphoranylideneamino]-2λ⁵,4λ⁵-catenadi(phosphazene) (P4-t-Oct); and any combination of two or more thereof. Among these, potassium hydrogen carbonate, sodium hydrogen carbonate, lithium acetate, lithium acetylacetonate, diazabicycloundecene, and P4-t-Bu are preferred because of good yield.
- Two-component system of (b-1) and (b-2) (polycarbonate polyol (α"))

The mass ratio of the polycarbonate polyol (b-1) to the polyester polyol (b-2) having an average hydroxyl group functionality of 3 or more ([mass of (b-1)]/[mass of (b-2)]) is preferably 90/10 to 10/90, more preferably (b-1)/(b-2) = 80/20 to 20/80, even more preferably 70/30 to 30/70, and particularly preferably 60/40 to 40/60.
- Three-component system of (b-1), (b-2), and (b-3) (polycarbonate polyol (β"))

The mass ratio of the polycarbonate polyol (b-1) to the polyester polyol (b-2) having an average hydroxyl group functionality of 3 or more and the polyester polyol (b-3) having an average hydroxyl group functionality of 2 or more and less than 3 ([mass of (b-1)]/([mass of (b-2)]+[mass of (b-3)])) is preferably 95/5 to 5/95, more preferably 90/10 to 10/90, even more preferably 80/20 to 20/80, still more preferably 70/30 to 30/70, and particularly preferably 60/40 to 40/60.

When the mass ratio is in these ranges, an aqueous polyurethane resin emulsion composition having high strength and high elongation mechanical properties is obtained due to the balance between the cohesive force of the polycarbonate polyol (b-1), the urethane group concentration, and the content of the polyester polyol (b-2) or the polyester polyols (b-2) and (b-3).

The average hydroxyl group functionality of the polycarbonate polyol (B1) and the polyfunctional polyol (B2) is preferably 2.1 to 3.5, more preferably 2.2 to 3.0, even more preferably 2.3 to 2.9, and particularly preferably 2.4 to 2.8. When the average hydroxyl group functionality is 3.5 or less, the elongation at break in the tensile test tends to be further improved, and when the average hydroxyl group functionality is 2.1 or more, the strength at break in the tensile test tends to be further improved.

The average hydroxyl value of the polycarbonate polyol (B1) and the polyfunctional polyol (B2) is preferably 40 to 500 mgKOH/g, and more preferably 50 to 300 mgKOH/g. When the average hydroxyl value is 40 mgKOH/g or more, the urethane group concentration in the polyurethane resin does not become too low, and the strength at break in the tensile test is further improved. When the average hydroxyl value is 500 mgKOH/g or less, the urethane group concentration does not become too high, and the elongation at break in the tensile test is further improved.

The number average molecular weight of the polycarbonate polyol (B1) and the polyfunctional polyol (B2) is preferably 400 to 4,000 g/mol, and more preferably 500 to 3,000 g/mol. When the number average molecular weight is 400 g/mol or more, the urethane group concentration in the polyurethane does not become too high, the initial modulus is suppressed, and the flexibility is further improved. When the number average molecular weight is 4000 g/mol or less, the urethane group concentration in the polyurethane resin does not become too low, and the strength at break in the tensile test is further improved.

The ester group concentration of the polycarbonate polyol (B1) and the polyfunctional polyol (B2) is preferably 10 to 90 mass%, more preferably 15 to 80 mass%, even more preferably 20 to 70 mass%, and particularly preferably 25 to 60 mass%. When the ester group concentration is 10 mass% or more, a polyurethane resin excellent in low-temperature characteristics tends to be easily obtained. When the ester group concentration is 90 mass% or less, a polyurethane resin excellent in long-term durability such as moist-heat resistance tends to be easily obtained.

The number average molecular weight of the polycarbonate polyol (b-1) is preferably 400 to 5,000 g/mol, and more preferably 500 to 3,000 g/mol, in consideration of ease of synthesis and ease of handling.

### (Method for Producing Polycarbonate Polyol (B1) and Polyfunctional Polyol (B2))

The polycarbonate polyol (B1) and the polyfunctional polyol (B2) can be produced by subjecting a polycarbonate polyol (b-1), a polyester polyol (b-2) having an average hydroxyl group functionality of 3 or more, and optionally a polyester polyol (b-3) having an average hydroxyl group functionality of 2 or more and less than 3 to a transesterification reaction. At this time, it is preferable to use a catalyst, and the amount of the catalyst used is 0.0001 to 1 mass%, preferably 0.001 to 0.1 mass%, of the total mass of the polycarbonate polyol (b-1) and the polyester polyol (b-2) having an average hydroxyl group functionality of 3 or more, or when the polyester polyol (b-3) is included, the total mass of the polycarbonate polyol (b-1), the polyester polyol (b-2) having an average hydroxyl group functionality of 3 or more, and the polyester polyol (b-3). When the amount of the catalyst is the lower limit value or higher, a longer reaction time can be further suppressed, so that the resulting polycarbonate polyol is further less likely to be colored. When the amount of the catalyst is the upper limit value or lower, the turbidity is further suppressed.

The reaction temperature of the transesterification reaction is preferably 70 to 250°C, and more preferably 80 to 220°C.

### (Content of Polycarbonate Polyol (B1) and Polyfunctional Polyol (B2))

The content of the polycarbonate polyol (B1) in the first aspect is preferably 5 to 99 mass%, more preferably 10 to 90 mass%, even more preferably 20 to 80 mass%, and particularly preferably 30 to 70 mass% with respect to the content of the polyol (A1) in the polyurethane resin composition. When the content of the polycarbonate polyol (B1) is in the above range, a polyurethane film having particularly good both 100% modulus and heat resistance is easily obtained when used as a polyurethane film. When the content of the polycarbonate polyol (B1) is 99 mass% or less, a polyurethane dispersion having particularly excellent handling properties is easily obtained, and a polyurethane film having particularly excellent 100% modulus is easily obtained. In addition, when the content of the polycarbonate polyol (B1) is 5 mass% or more, a polyurethane film having particularly excellent heat resistance is easily obtained.

In the modification of the first aspect, the content of the polyfunctional polyol (B2) is the same as the content of the polycarbonate polyol (B1) in the first aspect. However, "with respect to the content of the polyol (A1) in the polyurethane resin composition" should be replaced with "with respect to the total sum of the content of the polyol (A2) and the content of the polyfunctional polyol (B2) in the polyurethane resin composition."

The content of the polycarbonate polyol (B1) in the second aspect is preferably 40 to 99 mass%, more preferably 45 to 90 mass%, even more preferably 50 to 80 mass%, and particularly preferably 55 to 70 mass% with respect to the content of the polyol (A1) in the polyurethane resin composition. When the content of the polycarbonate polyol (B1) is in the above range, a polyurethane resin having particularly excellent softening temperature and achieving both 100% modulus, breaking strength, and elongation at break is easily obtained when used as a polyurethane film.

In the modification of the second aspect, the content of the polyfunctional polyol (B2) is the same as the content of the polycarbonate polyol (B1) in the second aspect. However, "with respect to the content of the polyol (A1) in the polyurethane resin composition" should be replaced with "with respect to the total sum of the content of the polyol (A2) and the content of the polyfunctional polyol (B2) in the polyurethane resin composition."

### (Average Hydroxyl Value of Polyol (A1)/Average Hydroxyl Value of Polyol (A2) and Polyfunctional Polyol (B2))

The average hydroxyl value of the polyol (A1) in the first aspect and the second aspect, and the average hydroxyl value when the polyol (A2) and the polyfunctional polyol (B2) are mixed in the modification of the first aspect and the modification of the second aspect are preferably 30 to 150 mgKOH/g, more preferably 40 to 130 mgKOH/g, even more preferably 50 to 120 mgKOH/g, and particularly preferably 60 to 110 mgKOH/g. When the average hydroxyl value is in the above range, a polyurethane film having particularly good both 100% modulus and heat resistance tends to be easily obtained when used as a polyurethane film. Further, when the average hydroxyl value is 130 mgKOH/g or less, a polyurethane film having particularly excellent 100% modulus is easily obtained.

### (Crosslinking Density)

The crosslinking density with respect to the isocyanate-terminated urethane prepolymer (E) and the chain extender (G) contained as needed is preferably 0.02 to 0.30, more preferably 0.05 to 0.25, and even more preferably 0.10 to 0.20. When the crosslinking density is in the above range, a polyurethane film having particularly good both 100% modulus and heat resistance is easily obtained when used as a polyurethane film. Further, when the crosslinking density is 0.30 or less, a polyurethane film having particularly excellent 100% modulus is easily obtained.

### <Organic Acid (C)>

The organic acid (C) may be, for example, a hydrophilic group-containing monomer that imparts hydrophilicity to the isocyanate-terminated urethane prepolymer (E) obtained by reaction with the polyisocyanate (D) and can render the ultimately obtained resin composition aqueous.

Examples of the organic acid (C) include those having one or more active hydrogen groups. Examples of the organic acid include carboxylic acid, sulfonic acid, phosphoric acid, phosphonic acid, phosphinic acid, thiosulfonic acid, and the like, and any combination of two or more thereof. These groups may be introduced independently or may be associated in a chelating manner. Among these, dimethylol fatty acids having a carboxy group (-COOH) are more preferred.

The dimethylol fatty acid may be, for example, a compound represented by the following formula (c).

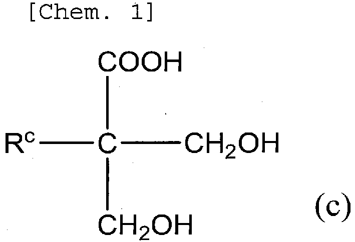

In formula (c), R^{c} represents an aliphatic hydrocarbon group. The number of carbon atoms in the aliphatic hydrocarbon group represented by R^{c} may be, for example, 1 or more, and may be 10 or less, 6 or less, or 3 or less. The aliphatic hydrocarbon group represented by R^{c} may be linear or may have branches. The aliphatic hydrocarbon group represented by R^{c} may be, for example, - CH₃, -CH₂CH₃, -CH₂CH₂CH₃, or CH₂CH₂CH₂CH₂CH₂CH₂CH₃.

Examples of the dimethylol fatty acid include dimethylol alkanoic acids such as dimethylol propionic acid (2,2-dimethylolpropanoic acid, etc.), dimethylol butanoic acid, dimethylol pentanoic acid, and dimethylol nonanoic acid, and any combination of two or more thereof.

The content of the organic acid (C) in the polyurethane resin composition may be 0.01 mmol/g or more, 0.10 mmol/g or more, 0.20 mmol/g or more, or 0.30 mmol/g or more, and 0.80 mmol/g or less, 0.70 mmol/g or less, 0.60 mmol/g or less, 0.50 mmol/g or less, or 0.40 mmol/g or less, based on the total sum of the mass of the isocyanate-terminated urethane prepolymer (E) and the mass of the chain extender (G).

### <Polyisocyanate (D)>

The polyisocyanate (D) is a compound having two or more isocyanate groups (-N=C=O). The number of isocyanate groups in the polyisocyanate (D) may be, for example, 6 or less, 4 or less, or 3 or less. The number of isocyanate groups in the polyisocyanate (D) may be, for example, 2 to 3, or may be 2. The polyisocyanate (D) may be, for example, a compound having multiple isocyanate groups and a hydrocarbon group connecting the multiple isocyanate groups.

The polyisocyanate (D) is not particularly limited, and examples thereof include various conventionally known polyisocyanates. Examples thereof include aliphatic isocyanates such as hexamethylene diisocyanate, 1,5-pentamethylene diisocyanate, 1,4-tetramethylene diisocyanate, 2-methylpentane-1,5-diisocyanate, and lysine diisocyanate; alicyclic diisocyanates such as isophorone diisocyanate, norbornane diisocyanate, hydrogenated tolylene diisocyanate, hydrogenated xylylene diisocyanate, hydrogenated diphenylmethane diisocyanate, and hydrogenated tetramethylxylylene diisocyanate; aromatic isocyanates such as 2,4-tolylene diisocyanate, 2,6-tolylene diisocyanate, 4,4'-diphenylmethane diisocyanate, 2,4'-diphenylmethane diisocyanate, 2,2'-diphenylmethane diisocyanate, 4,4'-diphenyl ether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, and 3,3'-dimethoxydiphenyl-4,4'-diisocyanate; araliphatic diisocyanates such as xylylene-1,4-diisocyanate and xylylene-1,3-diisocyanate; allophanate-modified polyisocyanates obtained by a reaction of these organic polyisocyanates and an alcohol; and any combination of two or more thereof.

The polyisocyanate (D) is preferably an aliphatic diisocyanate or an alicyclic diisocyanate, more preferably an alicyclic diisocyanate, and even more preferably isophorone diisocyanate or hydrogenated diphenylmethane diisocyanate.

In the first aspect and the second aspect, the ratio of the total number of moles of hydroxyl groups of the polyol (A1) excluding the polycarbonate polyol (B1) to the total number of moles of isocyanate groups of the polyisocyanate (D) (hydroxyl group/isocyanate group) may be, for example, 0.200 or more, 0.300 or more, or 0.400 or more, and 1.000 or less, 0.950 or less, 0.900 or less, or 0.800 or less.

In the modification of the first aspect and the modification of the second aspect, the ratio (hydroxyl group/isocyanate group) is the same as the ratio (hydroxyl group/isocyanate group) in the first aspect and the second aspect. However, "total number of moles of hydroxyl groups of the polyol (A1) excluding the polycarbonate polyol (B1)" should be replaced with "total number of moles of hydroxyl groups of the polyol (A2)."

### <Embodiment of Isocyanate-Terminated Urethane Prepolymer (E) >

An embodiment of the isocyanate-terminated urethane prepolymer (E) may include, for example, a reaction product of a polyol (A1) including a polycarbonate polyol (B1) having an ester bond and an average hydroxyl group functionality of more than 2, an organic acid (C), and a polyisocyanate (D).

A modification of an embodiment of the isocyanate-terminated urethane prepolymer (E) may include, for example, a reaction product of a polyol (A2), a polyfunctional polyol (B2), an organic acid (C), and a polyisocyanate (D).

### <Neutralizing Agent (F)>

The neutralizing agent (F) is preferably a basic neutralizing agent. Examples of the neutralizing agent (F) include organic amines such as ammonia, ethylamine, trimethylamine, triethylamine, triisopropylamine, tributylamine, triethanolamine, N-methyldiethanolamine, N-phenyldiethanolamine, monoethanolamine, dimethylethanolamine, diethylethanolamine, morpholine, N-methylmorpholine, 2-amino-2-ethyl-1-propanol, and higher alkyl-modified morpholine; alkali metals such as lithium, potassium, and sodium; inorganic alkalis such as sodium hydroxide and potassium hydroxide; and the like, and any combination of two or more thereof. Further, from the viewpoint of improving the durability and smoothness of the coating film, highly volatile neutralizing agents that dissociate by heating, such as ammonia, trimethylamine, and triethylamine, are preferred.

The neutralizing agent may be a trialkylamine. Examples of the trialkylamine include trimethylamine, triethylamine, triisopropylamine, and tributylamine.

In order to improve the aqueous dispersion stability of the polyurethane resin composition, the neutralizing agent (F) may further include an anionic polar group-containing compound and a cationic polar group-containing compound.

Examples of the anionic polar group-containing compound include those composed of an organic acid having one or more active hydrogen groups and a neutralizing agent.

Examples of the organic acid include carboxylates, sulfonates, phosphates, phosphonates, phosphinates, thiosulfonates, and the like, and any combination of two or more thereof. These groups may be introduced independently or may be associated in a chelating manner.

Examples of the cationic polar group-containing compound include those composed of:
a tertiary amine having one or more active hydrogen groups; and
one or more selected from a neutralizing agent of an inorganic acid and an organic acid, and a quaternizing agent.

Examples of the tertiary amine having one or more active hydrogen groups include N,N-dimethylethanolamine, N,N-diethylethanolamine, N,N-dipropylethanolamine, N,N-diphenylethanolamine, N-methyl-N-ethylethanolamine, N-methyl-N-phenylethanolamine, N,N-dimethylpropanolamine, N-methyl-N-ethylpropanolamine, N-methyldiethanolamine, N-ethyldiethanolamine, N-methyldipropanolamine, N-phenyldiethanolamine, N-phenyldipropanolamine, N-hydroxyethyl-N-hydroxypropyl-methylamine, N,N'-dihydroxyethylpiperazine, triethanolamine, triisopropanolamine, N-methyl-bis-(3-aminopropyl)-amine, and N-methyl-bis-(2-aminopropyl)-amine; products obtained by adding an alkylene oxide to a primary amine such as ammonia or methylamine, or a secondary amine such as dimethylamine; and any combination of two or more thereof.

Examples of the inorganic acid and the organic acid include hydrochloric acid, acetic acid, lactic acid, cyanoacetic acid, phosphoric acid, sulfuric acid, and the like, and any combination of two or more thereof.

Examples of the quaternizing agent include dimethyl sulfate, benzyl chloride, bromoacetamide, chloroacetamide, alkyl halides such as ethyl bromide, propyl bromide and butyl bromide, and any combination of two or more thereof.

Other cationic polar group-containing compounds include cationic compounds such as primary amine salts, secondary amine salts, tertiary amine salts, and pyridinium salts.

The content of the neutralizing agent in the polyurethane resin composition may be 0.01 mmol/g or more, 0.10 mmol/g or more, 0.20 mmol/g or more, or 0.30 mmol/g or more, and 0.80 mmol/g or less, 0.70 mmol/g or less, 0.60 mmol/g or less, 0.50 mmol/g or less, or 0.40 mmol/g or less, based on the total sum of the mass of the isocyanate-terminated urethane prepolymer (E) and the mass of the chain extender (G).

### (Organic Solvent)

The isocyanate-terminated urethane prepolymer (E) may be diluted to a desired solid content with an organic solvent inert to isocyanate groups during the synthesis of the isocyanate-terminated urethane prepolymer (E). Examples of the organic solvent include aromatic solvents such as toluene, xylene, Swasol (aromatic hydrocarbon solvent manufactured by Maruzen Petrochemical Co., Ltd.), and Solvesso (aromatic hydrocarbon solvent manufactured by ExxonMobil Chemical); aliphatic hydrocarbon-based solvents such as hexane; alicyclic hydrocarbon-based solvents such as cyclohexane and isophorone; ketone-based solvents such as acetone, methyl ethyl ketone, methyl isobutyl ketone, and cyclohexanone; ester-based solvents such as ethyl acetate, butyl acetate, and isobutyl acetate; glycol ether ester-based solvents such as ethylene glycol monoethyl ether acetate, propylene glycol monomethyl ether acetate, propylene glycol-3-methyl-3-methoxybutyl acetate, and ethylene glycol ethyl-3-ethoxypropionate; glycol ether solvents such as ethylene glycol dimethyl ether, diethylene glycol dibutyl ether, propylene glycol dibutyl ether, and dipropylene glycol dimethyl ether; ether solvents such as tetrahydrofuran and dioxane; and any combination of two or more thereof.

The organic solvent is preferably an ester-based solvent such as ethyl acetate, butyl acetate, or isobutyl acetate, and particularly preferably a ketone-based solvent such as acetone, methyl ethyl ketone, or methyl isobutyl ketone, which can be easily removed during solvent removal and can be heated to 50 to 100°C during the formation of the isocyanate-terminated urethane prepolymer (E).

### <Method for Producing Isocyanate-Terminated Urethane Prepolymer (E)>

In the first aspect and the second aspect, first, a polyisocyanate (D), a polyol (A1), and an organic acid (C) are reacted in a diluent solvent as needed under the condition that the number of moles of isocyanate groups is excessive than the number of moles of hydroxyl groups to produce an isocyanate-terminated prepolymer before neutralization. A known urethanization catalyst may be used at this time. The reaction temperature is preferably 0 to 100°C, and particularly preferably 20 to 90°C.

In the case of the modification of the first aspect and the modification of the second aspect, "polyol (A1)" should be replaced with "polyol (A2) and polyfunctional polyol (B2)."

### <Chain Extender (G)>

The chain extender (G) is a compound that reacts with the isocyanate-terminated urethane prepolymer (E) to form a polyurethane resin. Examples of the chain extender include compounds having a functional group capable of reacting with an isocyanate group, such as a primary amino group (-NH₂), a secondary amino group (-NH-), or a hydroxyl group (-OH), and water (H₂O).

The chain extender (G) is preferably one or more selected from the group consisting of amine compounds having one or more primary or secondary amino groups and water.

The amine compound as the chain extender (G) may be an amine compound having two or more amino groups selected from the group consisting of primary amino groups and secondary amino groups, or may be a compound having one amino group selected from the group consisting of primary amino groups and secondary amino groups and one or more hydroxyl groups (-OH).

The amine compound is more preferably at least one selected from the group consisting of aliphatic diamines and alicyclic diamines. The amine compound may be, for example, a compound represented by formula (g1): H₂N-R^{g}-NH₂. In formula (g1), R^{g} represents an aliphatic hydrocarbon group or an alicyclic hydrocarbon group.

Examples of the amine compound include ethylene diamine, hexamethylene diamine, xylylene diamine, isophorone diamine, diethylene triamine, N-aminoethyl-N-ethanolamine, monoethanolamine, and the like, and any combination of two or more thereof.

A curing catalyst (polymerization catalyst) may be used as needed during the chain extension reaction. Examples of the curing catalyst include ordinary curing catalysts such as metal-based catalysts such as dioctyltin dilaurate, zinc naphthenate, and bismuth compounds, and amine-based catalysts such as triethylene diamine and N-methylmorpholine. By using a curing catalyst, the reaction temperature can be further lowered.

The equivalence ratio of the active hydrogen groups (amino groups and hydroxyl groups) of the amine compound of the chain extender (G) to the isocyanate groups of the isocyanate-terminated urethane prepolymer (E) (active hydrogen group/isocyanate group) is, for example, preferably 0 to 1.1, more preferably 0.05 to 1.05, even more preferably 0.10 to 1.00, and particularly preferably 0.2 to 0.8. When this ratio is in the above range, a polyurethane resin excellent in 100% modulus and heat resistance is easily formed.

### <Method for Producing Polyurethane Resin Composition>

The polyurethane resin composition can be produced, for example, by a method including a step of neutralizing the isocyanate-terminated urethane prepolymer (E) with a neutralizing agent (F) to obtain a neutralized product of the isocyanate-terminated urethane prepolymer (E), and a step of emulsifying the neutralized product of the isocyanate-terminated urethane prepolymer (E) with water and reacting it with a chain extender (G) to obtain a polyurethane resin composition.

As a method for performing the chain extension reaction with the isocyanate-terminated urethane prepolymer (E) and the chain extender (G), a method of previously dissolving the chain extender (G) in water, charging the isocyanate-terminated urethane prepolymer (E) into the aqueous solution of the chain extender (G) to perform emulsification and chain extension reaction, a method of emulsifying the isocyanate-terminated urethane prepolymer (E) in water and then charging the chain extender (G) or an aqueous solution of the chain extender (G) to perform the chain extension reaction, and the like are exemplified.

### (Content of Urea Groups Derived from Chain Extender (G) (Urea Group Concentration Derived from Chain Extender (G)))

The lower limit of the content of urea groups derived from the chain extender (G) in the polyurethane resin composition is, for example, 0.05 mmol/g or more, 0.07 mmol/g or more, 0.10 mmol/g or more, 0.13 mmol/g or more, 0.15 mmol/g or more, 0.20 mmol/g or more, or 0.25 mmol/g or more, with respect to the total sum of the mass of the isocyanate-terminated urethane prepolymer (E) and the mass of the chain extender (G). The upper limit of the content of urea groups derived from the chain extender (G) in the polyurethane resin composition is, for example, 1.00 mmol/g or less, 0.95 mmol/g or less, 0.90 mmol/g or less, 0.80 mmol/g or less, 0.75 mmol/g or less, 0.70 mmol/g or less, 0.60 mmol/g or less, 0.55 mmol/g or less, 0.50 mmol/g or less, or 0.45 mmol/g or less, with respect to the total sum of the mass of the isocyanate-terminated urethane prepolymer (E) and the mass of the chain extender (G). The content of urea groups derived from the chain extender (G) in the polyurethane resin composition is, for example, 0.05 mmol/g or more and 1.00 mmol/g or less, 0.07 mmol/g or more and 0.90 mmol/g or less, 0.10 mmol/g or more and 0.80 mmol/g or less, 0.13 mmol/g or more and 0.70 mmol/g or less, or 0.15 mmol/g or more and 0.60 mmol/g or less, with respect to the total sum of the mass of the isocyanate-terminated urethane prepolymer (E) and the mass of the chain extender (G). When the content of urea groups derived from the chain extender (G) is in the above range, a polyurethane film having further better both 100% modulus and heat resistance is easily obtained when used as a polyurethane film. Further, when the content of urea groups derived from the chain extender (G) is 1.00 mmol/g or less, a polyurethane film having further excellent 100% modulus is easily obtained.

When the chain extender (G) does not include anything other than an amine compound having one or more primary or secondary amino groups and water (that is, when the chain extender includes only an amine compound having one or more primary or secondary amino groups and water), the content of urea groups derived from the chain extender (G) coincides with the sum of the content of urea groups derived from the amine compound and the content of urea groups derived from water.

### (Content of Urea Groups Derived from Amine Compound (Urea Group Concentration Derived from Amine Compound))

The chain extender (G) may include an amine compound having one or more primary or secondary amino groups. At this time, the lower limit of the content of urea groups derived from the amine compound in the polyurethane resin composition is, for example, more than 0 mmol/g, 0.01 mmol/g or more, 0.02 mmol/g or more, 0.03 mmol/g or more, 0.05 mmol/g or more, 0.10 mmol/g or more, 0.13 mmol/g or more, 0.15 mmol/g or more, 0.20 mmol/g or more, or 0.25 mmol/g or more, with respect to the total sum of the mass of the isocyanate-terminated urethane prepolymer (E) and the mass of the chain extender (G). The upper limit of the content of urea groups derived from the amine compound in the polyurethane resin composition is, for example, 0.95 mmol/g or less, 0.90 mmol/g or less, 0.80 mmol/g or less, 0.70 mmol/g or less, 0.60 mmol/g or less, 0.50 mmol/g or less, 0.48 mmol/g or less, 0.45 mmol/g or less, 0.40 mmol/g or less, 0.34 mmol/g or less, 0.30 mmol/g or less, 0.25 mmol/g or less, or 0.23 mmol/g or less, with respect to the total sum of the mass of the isocyanate-terminated urethane prepolymer (E) and the mass of the chain extender (G). The content of urea groups derived from the amine compound in the polyurethane resin composition is, for example, more than 0 mmol/g and 0.95 mmol/g or less, 0.01 mmol/g or more and 0.9 mmol/g or less, 0.02 mmol/g or more and 0.80 mmol/g or less, 0.05 mmol/g or more and 0.70 mmol/g or less, 0.10 mmol/g or more and 0.60 mmol/g or less, 0.13 mmol/g or more and 0.50 mmol/g or less, 0.15 mmol/g or more and 0.40 mmol/g or less, 0.20 mmol/g or more and 0.34 mmol/g or less, or 0.25 mmol/g or more and 0.30 mmol/g or less, with respect to the total sum of the mass of the isocyanate-terminated urethane prepolymer (E) and the mass of the chain extender (G). When the content of urea groups derived from the amine compound is in the above range, a polyurethane film having further better both 100% modulus and heat resistance is easily obtained when used as a polyurethane film. Further, when the content of urea groups derived from the amine compound is 0.95 mmol/g or less, a polyurethane film having further excellent 100% modulus is easily obtained.

### (Content of Urea Groups Derived from Water (Urea Group Concentration Derived from Water))

The chain extender (G) may include water.

The lower limit of the content of urea groups derived from water in the polyurethane resin composition is, for example, more than 0 mmol/g, 0.01 mmol/g or more, 0.02 mmol/g or more, 0.03 mmol/g or more, 0.05 mmol/g or more, 0.07 mmol/g or more, 0.10 mmol/g or more, 0.13 mmol/g or more, 0.15 mmol/g or more, 0.20 mmol/g or more, or 0.25 mmol/g or more, with respect to the total sum of the mass of the isocyanate-terminated urethane prepolymer (E) and the mass of the chain extender (G). The upper limit of the content of urea groups derived from water in the polyurethane resin composition is, for example, 0.95 mmol/g or less, 0.90 mmol/g or less, 0.80 mmol/g or less, 0.70 mmol/g or less, 0.60 mmol/g or less, 0.50 mmol/g or less, 0.40 mmol/g or less, 0.30 mmol/g or less, or 0.25 mmol/g or less, with respect to the total sum of the mass of the isocyanate-terminated urethane prepolymer (E) and the mass of the chain extender (G). The content of urea groups derived from water in the polyurethane resin composition is, for example, more than 0 mmol/g and 0.95 mmol/g or less, 0.01 mmol/g or more and 0.9 mmol/g or less, 0.02 mmol/g or more and 0.80 mmol/g or less, 0.05 mmol/g or more and 0.70 mmol/g or less, 0.10 mmol/g or more and 0.60 mmol/g or less, 0.13 mmol/g or more and 0.50 mmol/g or less, 0.15 mmol/g or more and 0.40 mmol/g or less, 0.20 mmol/g or more and 0.34 mmol/g or less, or 0.25 mmol/g or more and 0.30 mmol/g or less, with respect to the total sum of the mass of the isocyanate-terminated urethane prepolymer (E) and the mass of the chain extender (G). When the content of urea groups derived from water is in the above range, a polyurethane film having further better both 100% modulus and heat resistance is easily obtained when used as a polyurethane film. Further, when the content of urea groups derived from water is 0.95 mmol/g or less, a polyurethane film having further excellent 100% modulus is easily obtained.

### (Ratio of Content of Urea Groups Derived from Amine Compound to Content of Urea Groups Derived from Chain Extender (G))

The ratio of the content of urea groups derived from the amine compound to the content of urea groups derived from the chain extender (G) (urea group ratio derived from amine compound) can be calculated by dividing the urea group concentration derived from the amine compound by the urea group concentration derived from the chain extender (G), and the lower limit thereof is, for example, more than 0 mol%, 1 mol% or more, 3 mol% or more, 5 mol% or more, 10 mol% or more, 15 mol% or more, 20 mol% or more, 25 mol% or more, or 30 mol% or more. The upper limit of the urea group ratio derived from the amine compound is, for example, 99 mol% or less, 97 mol% or less, 95 mol% or less, 90 mol% or less, 85 mol% or less, 80 mol% or less, 75 mol% or less, 70 mol% or less, or 65 mol% or less. The urea group ratio derived from the amine compound may be, for example, more than 0 mol% and 99 mol% or less, 5 mol% or more and 95 mol% or less, 10 mol% or more and 90 mol% or less, 15 mol% or more and 80 mol% or less, or 20 mol% or more and 70 mol% or less. When the urea group ratio derived from the amine compound is in the above range, a polyurethane film having further better both 100% modulus and heat resistance is easily obtained when used as a polyurethane film. Further, when the urea group ratio derived from the amine compound is 99 mol% or less, a polyurethane film having further excellent 100% modulus is easily obtained.

The content of urea groups derived from the chain extender (G), the content of urea groups derived from the amine compound, the content of urea groups derived from water, and the ratio of the content of urea groups derived from the amine compound to the content of urea groups derived from the chain extender (G) (urea group ratio derived from amine compound) can also be calculated using ¹H-NMR measurement.

### <Curing Agent (X)>

The polyurethane resin composition may further contain a curing agent (X).

The curing agent (X) cures a reaction product of the isocyanate-terminated urethane prepolymer (E) and the chain extender (G) to form a polyurethane resin. When the polyurethane resin composition contains the curing agent (X), the curing agent (X) is one component of a two-component system. Specific examples of the curing agent (X) include urethane-modified products, urea-modified products, allophanate-modified products, biuret-modified products, uretdione-modified products, and isocyanurate-modified products of organic diisocyanates. Among these, trimers and adducts of hexamethylene diisocyanate (HDI) and isophorone diisocyanate (IPDI) are preferred.

### <Other Components>

The polyurethane resin composition may contain various additives in order to further enhance physical properties and add various physical properties. Examples of the various additives include film-forming agents, viscosity modifiers, anti-gelling agents, flame retardants, plasticizers, antioxidants, ultraviolet absorbers, antibacterial agents, fillers, internal mold release agents, reinforcing materials, matting agents, conductivity imparting agents, charge control agents, antistatic agents, lubricants, dyes, pigments, and other processing aids.

The polyurethane resin composition may be an emulsion obtained by neutralizing the isocyanate-terminated urethane prepolymer (E) with a neutralizing agent (F).

The polyurethane resin composition thus obtained is preferably used as an aqueous polyurethane resin emulsion. A formed product such as a coating film or a film that is tough, has a reduced 100% modulus (good tactile qualities), and has a high softening temperature can be obtained by curing the aqueous polyurethane resin emulsion; the polyurethane resin composition can be suitably used for leather applications such as artificial leather and synthetic leather, and as a surface treatment agent for leather. The 100% modulus is one of the indices for quantifying the moist and elastic high-quality feeling when touching synthetic leather, and when the numerical value is within a certain numerical range, the polyurethane resin has good characteristics described above.

The polyurethane resin composition may be a one-component type or a two-component type, but is preferably a one-component type.

### [Artificial Leather or Synthetic Leather]

An embodiment of artificial leather or synthetic leather contains a cured product of the polyurethane resin composition and a substrate. The artificial leather or synthetic leather according to an embodiment can be produced, for example, by a method including forming a cured product of the polyurethane resin composition on a substrate. The artificial leather or synthetic leather according to an embodiment can also be produced by a method including impregnating a substrate with the polyurethane resin composition and curing the polyurethane resin composition. In artificial leather, the substrate may be, for example, a base fabric such as a knitted fabric or a woven fabric. In synthetic leather, the substrate may be a non-woven fabric.

### [Surface Treatment Agent for Leather]

A surface treatment agent for leather is an agent used to treat the surface of leather or a material thereof. The leather to which the surface treatment agent for leather is applied may be, for example, synthetic leather, artificial leather, or natural leather.

### [Examples]

Examples of the present invention will be described below, but the present invention is not limited to these examples. In the examples, "%" and "part" are based on mass unless otherwise specified.

### <Calculation Method for Each Composition in Each Example>

### (Urea Group Concentration Derived from Chain Extender (G))

It is known that the reaction rate between an isocyanate group and a chain extender (G) is much higher than the reaction rate between an isocyanate group and a hydroxyl group of a polyol component. Therefore, the content of urea groups derived from the chain extender (G) (urea group concentration derived from chain extender (G)) with respect to the total sum of the mass of the isocyanate-terminated urethane prepolymer (E) and the mass of the chain extender (G) in the polyurethane resin composition coincides with the content of unreacted isocyanate groups of the isocyanate-terminated prepolymer (E). From the above, the urea group concentration derived from the chain extender (G) is defined by the following formula. Urea group concentration derived from chain extender (G) (mmol/g) = content of unreacted isocyanate groups of isocyanate-terminated prepolymer (E) (mmol/g) × ((charged amount of polyol (A1) (g) + charged amount of organic acid (C) (dimethylol fatty acid) (g) + charged amount of polyisocyanate (D) (g) + charged amount of organic solvent before isocyanate group measurement (g))/(charged amount of polyol (A1) (g) + charged amount of organic acid (C) (dimethylol fatty acid) (g) + charged amount of polyisocyanate (D) (g) + charged amount of chain extender (G) (g)))

In the case of each of the above-described modifications, "charged amount of polyol (A1) (g)" should be replaced with "charged amount of polyol (A2) (g) + charged amount of polyfunctional polyol (B2) (g)."

### (Urea Group Concentration Derived from Amine Compound)

The content of urea groups derived from the amine compound (urea group concentration derived from amine compound) with respect to the total sum of the mass of the isocyanate-terminated urethane prepolymer (E) and the mass of the chain extender (G) in the polyurethane resin composition was determined from the amount of amine calculated from the charged amount of the amine compound. Therefore, the urea group concentration derived from the amine compound is defined by the following formula. Urea group concentration derived from amine compound (mmol/g) = charged amount of amine compound (g)/molecular weight of chain extender (G) (amine compound) (g/mol) × number of amino groups per molecule/(charged amount of polyol (A1) (g) + charged amount of organic acid (C) (dimethylol fatty acid) (g) + charged amount of polyisocyanate (D) (g) + charged amount of chain extender (G) (g)) × 1000

In the case of each of the above-described modifications, "charged amount of polyol (A1) (g)" should be replaced with "charged amount of polyol (A2) (g) + charged amount of polyfunctional polyol (B2) (g)."

Since water is used as a solvent in an aspect of the present disclosure, urea groups derived from an amine compound and urea groups derived from water are generated simultaneously. Since the reaction rate of urea groups derived from an amine compound is much higher than that of urea groups derived from water, it can be said that all amines derived from the amine compound exist as urea groups.

### (Urea Group Concentration Derived from Water)

The content of urea groups derived from water (urea group concentration derived from water) with respect to the total sum of the mass of the isocyanate-terminated urethane prepolymer (E) and the mass of the chain extender (G) in the polyurethane resin composition was calculated by subtracting the urea group concentration derived from the amine compound from the urea group concentration derived from the chain extender (G). Therefore, the urea group concentration derived from water is defined by the following formula. Urea group concentration derived from water (mmol/g) = urea group concentration derived from chain extender (G) (mmol/g) - urea group concentration derived from amine compound (mmol/g)

### (Urea Group Ratio Derived from Amine Compound)

The content of urea groups derived from the amine compound with respect to the content of urea groups derived from the chain extender (G) (urea group ratio derived from amine compound) was calculated by dividing the urea group concentration derived from the amine compound by the urea group concentration derived from the chain extender (G). Therefore, the content of urea groups derived from the amine compound with respect to the content of urea groups derived from the chain extender (G) is defined by the following formula. Content of urea groups derived from amine compound with respect to content of urea groups derived from chain extender (G) (urea group ratio derived from amine compound) (mol%) = urea group concentration derived from amine compound (mmol/g)/urea group concentration derived from chain extender (G) (mmol/g) × 100

### (Average Hydroxyl Value of Polyol (A1)/Average Hydroxyl Value of Polyol (A2) and Polyfunctional Polyol (B2))

### • In the case of the first aspect and the second aspect

The average hydroxyl value of the polyol (A1) was calculated from the hydroxyl value when each polyol component in the polyol (A1) was mixed. Therefore, the average hydroxyl value is defined by the following formula. Average hydroxyl value of polyol (A1) (mgKOH/g) = (average hydroxyl value of polyol other than polycarbonate polyol (B1) (mgKOH/g) × charged amount of polyol other than polycarbonate polyol (B1) (g) + average hydroxyl value of polycarbonate polyol (B1) (mgKOH/g) × charged amount of polycarbonate polyol (B1) (g))/(charged amount of polyol (A1) (g))

### • In the case of the modification of the first aspect and the modification of the second aspect

The average hydroxyl value of the polyol (A2) and the polyfunctional polyol (B2) was calculated from the hydroxyl value when the polyol (A2) and the polyfunctional polyol (B2) were mixed. Therefore, the average hydroxyl value is defined by the following formula. Average hydroxyl value of polyol (A2) + polyfunctional polyol (B2) (mgKOH/g) = (average hydroxyl value of polyol (A2) (mgKOH/g) × charged amount of polyol (A2) (g) + average hydroxyl value of polyfunctional polyol (B2) (mgKOH/g) × charged amount of polyfunctional polyol (B2) (g))/(charged amount of polyol (A2) (g) + charged amount of polyfunctional polyol (B2) (g))

### (Crosslinking Density)

The crosslinking density with respect to the isocyanate-terminated urethane prepolymer (E) and the chain extender (G) is calculated as follows.

### • In the case of the first aspect and the second aspect

It was calculated from the amount of crosslinking derived from each component of:
polycarbonate polyol (B1);
polyol having an average hydroxyl group functionality of more than 2 in polyol (A1) (excluding polycarbonate polyol (B1)); and
polyhydric alcohol having a functionality of 3 or more.

### • In the case of the modification of the first aspect and the modification of the second aspect

It was calculated from the amount of crosslinking derived from each component of:
polyfunctional polyol (B2);
polyol having an average hydroxyl group functionality of more than 2 in polyol (A2); and
polyhydric alcohol having a functionality of 3 or more.

Therefore, the crosslinking density is defined by the following formula. When there are other components that form crosslinks, the crosslinking density can be calculated similarly by replacing "polycarbonate polyol (B1)," "polyfunctional polyol (B2)," and "polyhydric alcohol" in the numerator of the formula with the other components. However, the crosslinking density can be calculated by replacing components having known average hydroxyl values with "polycarbonate polyol (B1)" and "polyfunctional polyol (B2)," and replacing components having known true number average molecular weights (absolute molecular weight) with "polyhydric alcohol."

### [In the case of polycarbonate polyol (B1)]

Crosslinking density (mmol/g) = charged amount of polycarbonate polyol (B1) (g) × average hydroxyl value of polycarbonate polyol (B1) (mgKOH/g)/56.11 (KOHg/g)/1000/functionality of polycarbonate polyol (B1) × (functionality of polycarbonate polyol (B1) - 2)/(charged amount of polyol (A1) (g) + charged amount of organic acid (C) (dimethylol fatty acid) (g) + charged amount of polyisocyanate (D) (g) + charged amount of chain extender (G) (g)) × 1000

### [In the case of polyfunctional polyol (B2)]

Crosslinking density (mmol/g) = charged amount of polyfunctional polyol (B2) (g) × average hydroxyl value of polyfunctional polyol (B2) (mgKOH/g)/56.11 (KOHg/g)/1000/functionality of polyfunctional polyol (B2) × (functionality of polyfunctional polyol (B2) - 2)/(charged amount of polyol (A2) (g) + charged amount of polyfunctional polyol (B2) (g) + charged amount of organic acid (C) (dimethylol fatty acid) (g) + charged amount of polyisocyanate (D) (g) + charged amount of chain extender (G) (g)) × 1000

[In the case of polyhydric alcohol having a functionality of 3 or more (or polyol having an average hydroxyl group functionality of more than 2)] Crosslinking density (mmol/g) = charged amount of polyhydric alcohol (or polyol having an average hydroxyl group functionality of more than 2) (g)/molecular weight of polyhydric alcohol (or polyol having an average hydroxyl group functionality of more than 2) (g/mol) × (functionality of polyhydric alcohol (or polyol having an average hydroxyl group functionality of more than 2) - 2)/(charged amount of polyol (A1) (g) + charged amount of organic acid (C) (dimethylol fatty acid) (g) + charged amount of polyisocyanate (D) (g) + charged amount of chain extender (G) (g)) × 1000

In the case of each of the above-described modifications, "charged amount of polyol (A1) (g)" should be replaced with "charged amount of polyol (A2) (g) + charged amount of polyfunctional polyol (B2) (g)."

### (Polycarbonate Polyol (B1) Content, Polyfunctional Polyol (B2) Content)

### • In the case of the first aspect and the second aspect

The content of the polycarbonate polyol (B1) in the polyurethane resin was calculated from the mass ratio when the polycarbonate polyol (B1) and the polyol (A1) other than the polycarbonate polyol (B1) were mixed. Therefore, the polycarbonate polyol (B1) content is defined by the following formula. Polycarbonate polyol (B1) content (mass%) = charged amount of polycarbonate polyol (B1) (g)/charged amount of polyol (A1) (g) × 100

### • In the case of the modification of the first aspect and the modification of the second aspect

The content of the polyfunctional polyol (B2) in the polyurethane resin was calculated from the mass ratio when the polyol (A2) and the polyfunctional polyol (B2) were mixed. Therefore, the polyfunctional polyol (B2) content is defined by the following formula. Polyfunctional polyol (B2) content (mass%) = charged amount of polyfunctional polyol (B2) (g)/(charged amount of polyol (A2) (g) + charged amount of polyfunctional polyol (B2) (g)) × 100

Methods for producing polycarbonate polyols (polycarbonate diols) used in Examples and Comparative Examples are shown below.

### [Synthesis Example 1: Polyol Production 1]

826 g of 1,6-hexanediol, 787 g of diethyl carbonate, and 0.05 g of tetrabutyl titanate were mixed in a 2 L two-necked glass reactor equipped with a stirrer, a thermometer, a heating device, and a condenser, and reacted at 100 to 190°C for 8 hours under normal pressure while removing low-boiling components. Further, the reaction temperature was set to 190°C, the pressure in the flask was reduced to 1 kPa, and the reaction was further carried out for 8 hours to obtain a polycarbonate polyol (polycarbonate diol (PCD-1)).

### [Synthesis Example 2: Polyol Production 2]

830 g of 1,6-hexanediol, 771 g of diethyl carbonate, and 0.05 g of tetrabutyl titanate were mixed in a 2 L two-necked glass reactor equipped with a stirrer, a thermometer, a heating device, and a condenser, and reacted at 100 to 190°C for 8 hours under normal pressure while removing low-boiling components. Further, the reaction temperature was set to 190°C, the pressure in the flask was reduced to 1 kPa, and the reaction was further carried out for 8 hours to obtain a polycarbonate polyol (polycarbonate diol (PCD-2)).

### [Synthesis Example 3: Polyol Production 3]

266.2 g of 1,6-hexanediol, 272.7 g of trimethylolpropane, 461.2 g of diethyl carbonate, and 0.05 g of potassium hydrogen carbonate were mixed in a 2 L two-necked glass reactor equipped with a stirrer, a thermometer, a heating device, and a condenser, and reacted at 100 to 190°C for 8 hours under normal pressure while removing low-boiling components. Further, the reaction temperature was set to 150°C, the pressure in the flask was reduced to 1 kPa, and the reaction was further carried out for 8 hours to obtain a polycarbonate polyol (PCP-α).

### [Synthesis Example 4: Polyol Production 4]

575 g of the polycarbonate diol (PCD-1) obtained in the Polyol Production 1, 400 g of polycaprolactone triol (PLACCEL 305), 25 g of polycaprolactone diol (PLACCEL 210), and 0.03 g of potassium hydrogen carbonate were charged into a 1 L four-necked glass reactor equipped with a stirrer, a thermometer, a heating device, and a condenser, and a transesterification reaction was performed at 190°C for 5 hours to obtain a polyol (PCP-1).

### [Synthesis Example 5: Polyol Production 5]

674 g of the polycarbonate diol (PCD-2) obtained in the Polyol Production 2, 326 g of polycaprolactone triol (PLACCEL 305), and 0.03 g of potassium hydrogen carbonate were charged into a 1 L four-necked glass reactor equipped with a stirrer, a thermometer, a heating device, and a condenser, and a transesterification reaction was performed at 190°C for 5 hours to obtain a polyol (PCP-2).

### [Synthesis Example 6: Polyol Production 6]

678.1 g of the polycarbonate diol (PCD-1) obtained in the Polyol Production 1, 85.7 g of polycaprolactone triol (PLACCEL 305), 236.2 g of polycaprolactone diol (PLACCEL 210), and 0.03 g of potassium hydrogen carbonate were charged into a 1 L four-necked glass reactor equipped with a stirrer, a thermometer, a heating device, and a condenser, and a transesterification reaction was performed at 190°C for 5 hours to obtain a polyol (PCP-3).

### [Synthesis Example 7: Polyol Production 7]

50 g of the polycarbonate diol (PCD-1) obtained in the Polyol Production 1, 249.9 g of polycaprolactone triol (PLACCEL 320), 199.9 g of polycaprolactone diol (PLACCEL 220), and 0.03 g of potassium hydrogen carbonate were charged into a 1 L four-necked glass reactor equipped with a stirrer, a thermometer, a heating device, and a condenser, and a transesterification reaction was performed at 190°C for 5 hours to obtain a polyol (PCP-4).

### [Synthesis Example 8: Polyol Production 8]

288.7 g of the polycarbonate diol (PCD-1) obtained in the Polyol Production 1, 125.9 g of the polycarbonate polyol (PCP-α) obtained in the Polyol Production 3, 85.3 g of polycaprolactone diol (PLACCEL 220), and 0.03 g of potassium hydrogen carbonate were charged into a 1 L four-necked glass reactor equipped with a stirrer, a thermometer, a heating device, and a condenser, and a transesterification reaction was performed at 190°C for 5 hours to obtain a polyol (PCP-5).

### (Average Hydroxyl Group Functionality)

The average hydroxyl group functionality of the polycarbonate polyol (B1) and the polyfunctional polyol (B2) was calculated by the following formula based on the nominal functionality of the polyol included in the polycarbonate polyol (B1) and the polyfunctional polyol (B2). The results are shown in Table 1. Average hydroxyl group functionality = ((functionality × number of moles of polycarbonate polyol (b-1)) + (functionality × number of moles of polyester polyol (b-2)) + (functionality × number of moles of polyester polyol (b-3)))/((number of moles of polycarbonate polyol (b-1)) + (number of moles of polyester polyol (b-2)) + (number of moles of polyester polyol (b-3)))

The number of moles in the above formula can be calculated by dividing the charged amount by the molecular weight. Number of moles of compound in reaction system (number of moles) = charged amount of compound (g)/molecular weight of compound (g/mol)

### (Hydroxyl Group Functionality of PCP-α)

When the average hydroxyl group functionality could not be calculated from the charged amount, the average hydroxyl group functionality was calculated using the number average molecular weight obtained by GPC measurement. The results are shown in Table 1. Average hydroxyl group functionality of PCP-α = 56.11 (KOH mg/g) × 1000/number average molecular weight calculated by GPC measurement (g/mol)/average hydroxyl value (mgKOH/g)

### (Ester Group Concentration)

The content of the polyester polyol (b-2) and the polyester polyol (b-3) (ester group concentration) with respect to the total sum of the polycarbonate polyol (b-1), the polyester polyol (b-2), and the polyester polyol (b-3) in the polycarbonate polyol (B1) and the polyfunctional polyol (B2) was calculated from the charged amounts of the polycarbonate compound and the polyester compound as raw materials. The ester group concentration is defined by the following formula. The results are shown in Table 1. Ester group concentration (mass%) = (charged amount of polyester polyol (b-2) (g) + charged amount of polyester polyol (b-3) (g))/(charged amount of polycarbonate polyol (b-1) (g) + charged amount of polyester polyol (b-2) (g) + charged amount of polyester polyol (b-3) (g)) × 100

### (Analysis and Evaluation)

### [Measurement of Number Average Molecular Weight]

GPC analysis of the resulting composition was performed under the following conditions to measure the number average molecular weight of the composition. The results are shown in Table 1.

### -Conditions-

(1) Measuring instrument: HLC-8420 (manufactured by Tosoh Corporation)
(2) Column: TSKgel (manufactured by Tosoh Corporation)
   - G3000H-XL
   - G3000H-XL
   - G2000H-XL
   - G2000H-XL
(3) Mobile phase: THF (tetrahydrofuran)
(4) Detector: RI (refractive index) detector (accessory of HLC-8420)
(5) Temperature: 40°C
(6) Flow rate: 1.000 ml/min
(7) Calibration curve: A calibration curve was obtained using the following products (all of which are bifunctional polyoxypropylene polyols manufactured by Sanyo Chemical Industries, Ltd.).
   - "SANNIX PP-200" (number average molecular weight = 200, average hydroxyl group functionality: 2)
   - "SANNIX PP-400" (number average molecular weight = 400, average hydroxyl group functionality: 2)
   - "SANNIX PP-1000" (number average molecular weight = 1000, average hydroxyl group functionality: 2)
   - "SANNIX PP-2000" (number average molecular weight = 2000, average hydroxyl group functionality: 2)
   - "SANNIX PP-3000" (number average molecular weight = 3200, average hydroxyl group functionality: 2)
   - "SANNIX PP-4000" (number average molecular weight = 4160, average hydroxyl group functionality: 2)
(8) Approximate expression of calibration curve: cubic expression
(9) Sample solution concentration: 0.5 mass% THF solution

### [Measurement of Hydroxyl Value (OHv)]

The hydroxyl value of the resulting composition was measured by a method using an acetylation reagent according to JIS K1557-1. The results are shown in Table 1.

### [Property Evaluation]

The resulting composition was used as a sample, the sample was heated at 80°C for 1 hour, and then left to stand at 25°C for 3 days. The state of the sample after standing was visually confirmed, and if the sample had even a slight fluidity at the above temperature, it was determined to be liquid, and if the sample had no fluidity, it was determined to be solid. The results are shown in Table 1.

**[Table 1]**

| | | | Synthesis Example 1 | Synthesis Example 2 | Synthesis Example 3 | Synthesis Example 4 | Synthesis Example 5 | Synthesis Example 6 | Synthesis Example 7 | Synthesis Example 8 |
|---|---|---|---|---|---|---|---|---|---|---|
| | | | PCD-1 | PCD-2 | PCP-α | PCP-1 | PCP-2 | PCP-3 | PCP-4 | PCP-5 |
| Blend | Raw Material | 1,6-Hexanediol | 826 | 830 | 266.2 | | | | | |
| | | Trimethylolpropane | | | 272.7 | | | | | |
| | | Diethyl Carbonate | 787 | 771 | | | | | | |
| | Polycarbonate polyol (b-1) | PCD-1 | | | | 575 | | 678.1 | 50 | 288.7 |
| | | PCD-2 | | | | | 674 | | | |
| | | PCP-α | | | | | | | | 125.9 |
| | Polyester Polyol (b-2) | PLACCEL 305 | | | | 400 | 326 | 85.7 | | |
| | | PLACCEL 320 | | | | | | | 249.9 | |
| | Polyester Polyol (b-3) | PLACCEL 210 | | | | 25 | | 236.2 | | |
| | | PLACCEL 220 | | | | | | | 199.9 | 85.3 |
| | Catalyst | Tetrabutyl Titanate | 0.05 | 0.05 | | | | | | |
| | | Potassium Hydrogen Carbonate | | | 0.05 | 0.03 | 0.03 | 0.03 | 0.03 | 0.03 |
| Composition | State (25°C) | | Solid | Solid | | | Liquid | Solid | Solid | |
| | Average Hydroxyl Group Functionality | | 2 | 2 | 5.0 | 2.8 | 2.6 | | 2.5 | 3.2 |
| | Number Average Molecular Weight (g/mol) | | | | | | 1080 | 1780 | 1650 | 1416 |
| | Hydroxyl Value (OHv) (mgKOH/g) | | 37.4 | 56.1 | 395 | 146 | 136.7 | 70.0 | 71.5 | 113.9 |
| | Ester Group Concentration (mass%) | | 0 | 0 | 0 | 43 | 33 | 32 | 90 | 17 |

- 1,6-hexanediol: manufactured by BASF-JAPAN Ltd.
- Trimethylolpropane: manufactured by Tokyo Chemical Industry Co., Ltd.
- Diethyl carbonate: manufactured by Sigma-Aldrich Co. LLC.
- Tetrabutyl titanate: manufactured by Tokyo Chemical Industry Co., Ltd.
- Potassium hydrogen carbonate: manufactured by FUJIFILM Wako Pure Chemical Corporation
- PLACCEL 305: polycaprolactone triol (molecular weight = 550, hydroxyl value = 305, functionality = 3) manufactured by Daicel Corporation
- PLACCEL 320: polycaprolactone triol (molecular weight = 2000, hydroxyl value = 84.2, functionality = 3) manufactured by Daicel Corporation
- PLACCEL 210: polycaprolactone diol (molecular weight = 1000, hydroxyl value = 112, functionality = 2) manufactured by Daicel Corporation
- PLACCEL 220: polycaprolactone diol (molecular weight = 2000, hydroxyl value = 56.1, functionality = 2) manufactured by Daicel Corporation

### (Example 1: Aqueous Polyurethane Resin Emulsion Production 1)

139.4 g of N-980N (manufactured by Tosoh Corporation: number average molecular weight 2000; hydroxyl value 56.11 mgKOH/g; 1,6-hexanediol-based polycarbonate diol), 6.2 g of 1,6-hexanediol, 62.4 g of PCP-1, 150 g of acetone, 10.6 g of 2,2-dimethylolpropanoic acid, and 69.3 g of isophorone diisocyanate were charged into a 2 L reactor equipped with a stirrer, a thermometer, a nitrogen sealing tube, and a condenser (hereinafter referred to as reactor A), heated to 60°C, and stirred at the same temperature for 30 minutes, and then 0.24 g of U-600 was added thereto, followed by reaction for 5 hours. The content of unreacted isocyanate groups at the end of urethanization was 0.323 mmol/g with respect to the above charged amount. Then, 8.0 g of triethylamine was charged to neutralize the carboxyl groups, and then 640 g of water was charged while stirring for emulsification. After the emulsification, 0.36 g of KL-245 was added, amine water (prepared by blending 60 g of water and 4.0 g of isophorone diamine) was charged within 30 minutes, and amine chain extension reaction was performed at 40°C for 12 hours. Stirring was stopped when the presence of isocyanate groups was no longer confirmed by FT-IR. Then, the reaction solution was transferred to a 2 L eggplant flask, and 150 g of acetone and 100 g of water were removed by vacuum distillation to obtain an aqueous polyurethane resin emulsion composition (PUD-1).

### (Example 2: Polyurethane Resin Emulsion Production 2)

114.4 g of N-980N, 3.0 g of 1,6-hexanediol, 93.6 g of PCP-1, 150 g of acetone, 10.6 g of 2,2-dimethylolpropanoic acid, and 69.3 g of isophorone diisocyanate were charged into a reactor A, heated to 60°C, and stirred at the same temperature for 30 minutes, and then 0.24 g of U-600 was added thereto, followed by reaction for 5 hours. The content of unreacted isocyanate groups at the end of urethanization was 0.305 mmol/g with respect to the above charged amount. Then, emulsification and operations after the emulsification were performed in the same manner as in Example 1 to obtain an aqueous polyurethane resin emulsion composition (PUD-2).

### (Example 3: Polyurethane Resin Emulsion Production 3)

110.3 g of N-980N, 4.1 g of 1,6-hexanediol, 93.6 g of PCP-2, 150 g of acetone, 10.6 g of 2,2-dimethylolpropanoic acid, and 69.3 g of isophorone diisocyanate were charged into a reactor A, heated to 60°C, and stirred at the same temperature for 30 minutes, and then 0.24 g of U-600 was added thereto, followed by reaction for 5 hours. The content of unreacted isocyanate groups at the end of urethanization was 0.312 mmol/g with respect to the above charged amount. Then, emulsification and operations after the emulsification were performed in the same manner as in Example 1 to obtain an aqueous polyurethane resin emulsion composition (PUD-3).

### (Example 4: Polyurethane Resin Emulsion Production 4)

59.4 g of N-980N, 145.3 g of PCP-1, 150 g of acetone, 10.6 g of 2,2-dimethylolpropanoic acid, and 72.7 g of isophorone diisocyanate were charged into a reactor A, heated to 60°C, and stirred at the same temperature for 30 minutes, and then 0.24 g of U-600 was added thereto, followed by reaction for 5 hours. The content of unreacted isocyanate groups at the end of urethanization was 0.260 mmol/g with respect to the above charged amount. Then, emulsification and operations after the emulsification were performed in the same manner as in Example 1 to obtain an aqueous polyurethane resin emulsion composition (PUD-4).

### (Example 5: Polyurethane Resin Emulsion Production 5)

103.1 g of N-980N, 6.6 g of 1,6-hexanediol, 109.7 g of PCP-3, 150 g of acetone, 10.6 g of 2,2-dimethylolpropanoic acid, and 59.9 g of isophorone diisocyanate were charged into a reactor A, heated to 60°C, and stirred at the same temperature for 30 minutes, and then 0.24 g of U-600 was added thereto, followed by reaction for 5 hours. The content of unreacted isocyanate groups at the end of urethanization was 0.114 mmol/g with respect to the above charged amount. Then, 8.0 g of triethylamine was charged to neutralize the carboxyl groups, and then 640 g of water was charged while stirring for emulsification. After the emulsification, 0.36 g of KL-245 was added, amine water (prepared by blending 60 g of water and 2.0 g of isophorone diamine) was charged within 30 minutes, and amine chain extension reaction was performed at 40°C for 12 hours. Stirring was stopped when the presence of isocyanate groups was no longer confirmed by FT-IR. Then, the reaction solution was transferred to a 2 L eggplant flask, and 150 g of acetone and 100 g of water were removed by vacuum distillation to obtain an aqueous polyurethane resin emulsion composition (PUD-5).

### (Example 6: Polyurethane Resin Emulsion Production 6)

49.1 g of N-980N, 5.8 g of 1,6-hexanediol, 164.6 g of PCP-3, 150 g of acetone, 10.6 g of 2,2-dimethylolpropanoic acid, and 59.9 g of isophorone diisocyanate were charged into a reactor A, heated to 60°C, and stirred at the same temperature for 30 minutes, and then 0.24 g of U-600 was added thereto, followed by reaction for 5 hours. The content of unreacted isocyanate groups at the end of urethanization was 0.112 mmol/g with respect to the above charged amount. Then, emulsification and operations after the emulsification were performed in the same manner as in Example 5 to obtain an aqueous polyurethane resin emulsion composition (PUD-6).

### (Example 7: Polyurethane Resin Emulsion Production 7)

5.0 g of 1,6-hexanediol, 214.5 g of PCP-3, 150 g of acetone, 10.6 g of 2,2-dimethylolpropanoic acid, and 59.9 g of isophorone diisocyanate were charged into a reactor A, heated to 60°C, and stirred at the same temperature for 30 minutes, and then 0.24 g of U-600 was added thereto, followed by reaction for 5 hours. The content of unreacted isocyanate groups at the end of urethanization was 0.112 mmol/g with respect to the above charged amount. Then, emulsification and operations after the emulsification were performed in the same manner as in Example 5 to obtain an aqueous polyurethane resin emulsion composition (PUD-7).

### (Example 8: Polyurethane Resin Emulsion Production 8)

101.0 g of N-980N, 6.5 g of 1,6-hexanediol, 107.5 g of PCP-3, 150 g of acetone, 10.6 g of 2,2-dimethylolpropanoic acid, and 62.3 g of isophorone diisocyanate were charged into a reactor A, heated to 60°C, and stirred at the same temperature for 30 minutes, and then 0.24 g of U-600 was added thereto, followed by reaction for 5 hours. The content of unreacted isocyanate groups at the end of urethanization was 0.208 mmol/g with respect to the above charged amount. Then, emulsification and operations after the emulsification were performed in the same manner as in Example 1 to obtain an aqueous polyurethane resin emulsion composition (PUD-8).

### (Example 9: Polyurethane Resin Emulsion Production 9)

48.1 g of N-980N, 5.6 g of 1,6-hexanediol, 161.2 g of PCP-3, 150 g of acetone, 10.6 g of 2,2-dimethylolpropanoic acid, and 62.3 g of isophorone diisocyanate were charged into a reactor A, heated to 60°C, and stirred at the same temperature for 30 minutes, and then 0.24 g of U-600 was added thereto, followed by reaction for 5 hours. The content of unreacted isocyanate groups at the end of urethanization was 0.169 mmol/g with respect to the above charged amount. Then, emulsification and operations after the emulsification were performed in the same manner as in Example 1 to obtain an aqueous polyurethane resin emulsion composition (PUD-9).

### (Example 10: Polyurethane Resin Emulsion Production 10)

4.8 g of 1,6-hexanediol, 210.2 g of PCP-3, 150 g of acetone, 10.6 g of 2,2-dimethylolpropanoic acid, and 62.3 g of isophorone diisocyanate were charged into a reactor A, heated to 60°C, and stirred at the same temperature for 30 minutes, and then 0.24 g of U-600 was added thereto, followed by reaction for 5 hours. The content of unreacted isocyanate groups at the end of urethanization was 0.182 mmol/g with respect to the above charged amount. Then, emulsification and operations after the emulsification were performed in the same manner as in Example 1 to obtain an aqueous polyurethane resin emulsion composition (PUD-10).

### (Example 11: Polyurethane Resin Emulsion Production 11)

112.7 g of N-980N, 112.7 g of PCP-3, 150 g of acetone, 10.6 g of 2,2-dimethylolpropanoic acid, and 51.8 g of isophorone diisocyanate were charged into a reactor A, heated to 60°C, and stirred at the same temperature for 30 minutes, and then 0.24 g of U-600 was added thereto, followed by reaction for 5 hours. The content of unreacted isocyanate groups at the end of urethanization was 0.234 mmol/g with respect to the above charged amount. Then, emulsification and operations after the emulsification were performed in the same manner as in Example 1 to obtain an aqueous polyurethane resin emulsion composition (PUD-11).

### (Example 12: Polyurethane Resin Emulsion Production 12)

56.0 g of N-980N, 167.9 g of PCP-3, 150 g of acetone, 10.6 g of 2,2-dimethylolpropanoic acid, and 53.4 g of isophorone diisocyanate were charged into a reactor A, heated to 60°C, and stirred at the same temperature for 30 minutes, and then 0.24 g of U-600 was added thereto, followed by reaction for 5 hours. The content of unreacted isocyanate groups at the end of urethanization was 0.213 mmol/g with respect to the above charged amount. Then, emulsification and operations after the emulsification were performed in the same manner as in Example 1 to obtain an aqueous polyurethane resin emulsion composition (PUD-12).

### (Example 13: Polyurethane Resin Emulsion Production 13)

167.4 g of N-980N, 9.4 g of 1,6-hexanediol, 31.2 g of PCP-1, 150 g of acetone, 10.6 g of 2,2-dimethylolpropanoic acid, and 69.3 g of isophorone diisocyanate were charged into a reactor A, heated to 60°C, and stirred at the same temperature for 30 minutes, and then 0.24 g of U-600 was added thereto, followed by reaction for 5 hours. The content of unreacted isocyanate groups at the end of urethanization was 0.278 mmol/g with respect to the above charged amount. Then, emulsification and operations after the emulsification were performed in the same manner as in Example 1 to obtain an aqueous polyurethane resin emulsion composition (PUD-13).

### (Example 14: Polyurethane Resin Emulsion Production 14)

50.5 g of PLACCEL 220, 3.3 g of 1,6-hexanediol, 53.7 g of PCP-3, 75 g of acetone, 5.3 g of 2,2-dimethylolpropanoic acid, and 31.2 g of isophorone diisocyanate were charged into a reactor A, heated to 60°C, and stirred at the same temperature for 30 minutes, and then 0.12 g of U-600 was added thereto, followed by reaction for 5 hours. The content of unreacted isocyanate groups at the end of urethanization was 0.129 mmol/g with respect to the above charged amount. Then, 4.0 g of triethylamine was charged to neutralize the carboxyl groups, and then 320 g of water was charged while stirring for emulsification. After the emulsification, 0.18 g of KL-245 was added, amine water (prepared by blending 30 g of water and 2.0 g of isophorone diamine) was charged within 30 minutes, and amine chain extension reaction was performed at 40°C for 12 hours. Stirring was stopped when the presence of isocyanate groups was no longer confirmed by FT-IR. Then, the reaction solution was transferred to a 2 L eggplant flask, and 75 g of acetone and 50 g of water were removed by vacuum distillation to obtain an aqueous polyurethane resin emulsion composition (PUD-14).

### (Example 15: Polyurethane Resin Emulsion Production 15)

50.5 g of N-980N, 3.3 g of 1,6-hexanediol, 53.7 g of PCP-4, 75 g of acetone, 5.3 g of 2,2-dimethylolpropanoic acid, and 31.2 g of isophorone diisocyanate were charged into a reactor A, heated to 60°C, and stirred at the same temperature for 30 minutes, and then 0.12 g of U-600 was added thereto, followed by reaction for 5 hours. The content of unreacted isocyanate groups at the end of urethanization was 0.127 mmol/g with respect to the above charged amount. Then, emulsification and operations after the emulsification were performed in the same manner as in Example 14 to obtain an aqueous polyurethane resin emulsion composition (PUD-15).

### (Example 16: Polyurethane Resin Emulsion Production 16)

53.0 g of N-980N, 0.7 g of 1,6-hexanediol, 53.7 g of PCP-5, 75 g of acetone, 5.3 g of 2,2-dimethylolpropanoic acid, and 31.2 g of isophorone diisocyanate were charged into a reactor A, heated to 60°C, and stirred at the same temperature for 30 minutes, and then 0.12 g of U-600 was added thereto, followed by reaction for 5 hours. The content of unreacted isocyanate groups at the end of urethanization was 0.140 mmol/g with respect to the above charged amount. Then, emulsification and operations after the emulsification were performed in the same manner as in Example 14 to obtain an aqueous polyurethane resin emulsion composition (PUD-16).

### (Comparative Example 1: Polyurethane Resin Emulsion Production 17)

206.9 g of N-980N, 8.2 g of 1,6-hexanediol, 150 g of acetone, 10.6 g of 2,2-dimethylolpropanoic acid, and 62.3 g of isophorone diisocyanate were charged into a reactor A, heated to 60°C, and stirred at the same temperature for 30 minutes, and then 0.24 g of U-600 was added thereto, followed by reaction for 5 hours. The content of unreacted isocyanate groups at the end of urethanization was 0.197 mmol/g with respect to the above charged amount. Then, emulsification and operations after the emulsification were performed in the same manner as in Example 1 to obtain an aqueous polyurethane resin emulsion composition (PUD-17).

### (Comparative Example 2: Polyurethane Resin Emulsion Production 18)

198.2 g of N-980N, 7.8 g of 1,6-hexanediol, 150 g of acetone, 10.6 g of 2,2-dimethylolpropanoic acid, and 67.2 g of isophorone diisocyanate were charged into a reactor A, heated to 60°C, and stirred at the same temperature for 30 minutes, and then 0.24 g of U-600 was added thereto, followed by reaction for 5 hours. The content of unreacted isocyanate groups at the end of urethanization was 0.263 mmol/g with respect to the above charged amount. Then, 8.0 g of triethylamine was charged to neutralize the carboxyl groups, and then 640 g of water was charged while stirring for emulsification. After the emulsification, 0.36 g of KL-245 was added, amine water (prepared by blending 60 g of water and 8.0 g of isophorone diamine) was charged within 30 minutes, and amine chain extension reaction was performed at 40°C for 12 hours. Stirring was stopped when the presence of isocyanate groups was no longer confirmed by FT-IR. Then, the reaction solution was transferred to a 2 L eggplant flask, and 150 g of acetone and 100 g of water were removed by vacuum distillation to obtain an aqueous polyurethane resin emulsion composition (PUD-18).

### (Comparative Example 3: Polyurethane Resin Emulsion Production 19)

193.9 g of N-980N, 7.6 g of 1,6-hexanediol, 150 g of acetone, 10.6 g of 2,2-dimethylolpropanoic acid, and 69.7 g of isophorone diisocyanate were charged into a reactor A, heated to 60°C, and stirred at the same temperature for 30 minutes, and then 0.24 g of U-600 was added thereto, followed by reaction for 5 hours. The content of unreacted isocyanate groups at the end of urethanization was 0.275 mmol/g with respect to the above charged amount. Then, 8.0 g of triethylamine was charged to neutralize the carboxyl groups, and then 640 g of water was charged while stirring for emulsification. After the emulsification, 0.36 g of KL-245 was added, amine water (prepared by blending 60 g of water and 9.9 g of isophorone diamine) was charged within 30 minutes, and amine chain extension reaction was performed at 40°C for 12 hours. Stirring was stopped when the presence of isocyanate groups was no longer confirmed by FT-IR. Then, the reaction solution was transferred to a 2 L eggplant flask, and 150 g of acetone and 100 g of water were removed by vacuum distillation to obtain an aqueous polyurethane resin emulsion composition (PUD-19).

### (Comparative Example 4: Polyurethane Resin Emulsion Production 20)

202.3 g of N-980N, 7.1 g of 1,6-hexanediol, 4.3 g of trimethylolpropane, 150 g of acetone, 10.9 g of 2,2-dimethylolpropanoic acid, and 71.2 g of isophorone diisocyanate were charged into a reactor A, heated to 60°C, and stirred at the same temperature for 30 minutes, and then 0.24 g of U-600 was added thereto, followed by reaction for 5 hours. The content of unreacted isocyanate groups at the end of urethanization was 0.328 mmol/g with respect to the above charged amount. Then, 8.0 g of triethylamine was charged to neutralize the carboxyl groups, and then 640 g of water was charged while stirring for emulsification. After the emulsification, 0.36 g of KL-245 was added, amine water (prepared by blending 60 g of water and 4.1 g of isophorone diamine) was charged within 30 minutes, and amine chain extension reaction was performed at 40°C for 12 hours. Stirring was stopped when the presence of isocyanate groups was no longer confirmed by FT-IR. Then, the reaction solution was transferred to a 2 L eggplant flask, and 150 g of acetone and 100 g of water were removed by vacuum distillation to obtain an aqueous polyurethane resin emulsion composition (PUD-20).

### (Comparative Example 5: Polyurethane Resin Emulsion Production 21)

203.7 g of N-980N, 1.4 g of 1,6-hexanediol, 8.6 g of trimethylolpropane, 150 g of acetone, 10.9 g of 2,2-dimethylolpropanoic acid, and 71.2 g of isophorone diisocyanate were charged into a reactor A, heated to 60°C, and stirred at the same temperature for 30 minutes, and then 0.24 g of U-600 was added thereto, followed by reaction for 5 hours. The content of unreacted isocyanate groups at the end of urethanization was 0.305 mmol/g with respect to the above charged amount. Then, 8.0 g of triethylamine was charged to neutralize the carboxyl groups, and then 640 g of water was charged while stirring for emulsification. After the emulsification, 0.36 g of KL-245 was added, amine water (prepared by blending 60 g of water and 4.1 g of isophorone diamine) was charged within 30 minutes, and amine chain extension reaction was performed at 40°C for 12 hours. Stirring was stopped when the presence of isocyanate groups was no longer confirmed by FT-IR. Then, the reaction solution was transferred to a 2 L eggplant flask, and 150 g of acetone and 100 g of water were removed by vacuum distillation to obtain an aqueous polyurethane resin emulsion composition (PUD-21).

### (Example 17: Polyurethane Resin Emulsion Production 22)

48.8 g of N-980N, 3.2 g of 1,6-hexanediol, 52.0 g of PCP-3, 75 g of acetone, 5.3 g of 2,2-dimethylolpropanoic acid, and 35.4 g of isophorone diisocyanate were charged into a reactor A, heated to 60°C, and stirred at the same temperature for 30 minutes, and then 0.12 g of U-600 was added thereto, followed by reaction for 5 hours. The content of unreacted isocyanate groups at the end of urethanization was 0.374 mmol/g with respect to the above charged amount. Then, 4.0 g of triethylamine was charged to neutralize the carboxyl groups, and then 320 g of water was charged while stirring for emulsification. After the emulsification, 0.18 g of KL-245 was added, amine water (prepared by blending 30 g of water and 0.62 g of isophorone diamine) was charged within 30 minutes, and amine chain extension reaction was performed at 40°C for 12 hours. Stirring was stopped when the presence of isocyanate groups was no longer confirmed by FT-IR. Then, the reaction solution was transferred to a 2 L eggplant flask, and 75 g of acetone and 50 g of water were removed by vacuum distillation to obtain an aqueous polyurethane resin emulsion composition (PUD-22).

### (Example 18: Polyurethane Resin Emulsion Production 23)

48.1 g of N-980N, 3.2 g of 1,6-hexanediol, 51.2 g of PCP-3, 75 g of acetone, 5.3 g of 2,2-dimethylolpropanoic acid, and 36.8 g of isophorone diisocyanate were charged into a reactor A, heated to 60°C, and stirred at the same temperature for 30 minutes, and then 0.12 g of U-600 was added thereto, followed by reaction for 5 hours. The content of unreacted isocyanate groups at the end of urethanization was 0.423 mmol/g with respect to the above charged amount. Then, 4.0 g of triethylamine was charged to neutralize the carboxyl groups, and then 320 g of water was charged while stirring for emulsification. After the emulsification, 0.18 g of KL-245 was added, amine water (prepared by blending 30 g of water and 0.75 g of isophorone diamine) was charged within 30 minutes, and amine chain extension reaction was performed at 40°C for 12 hours. Stirring was stopped when the presence of isocyanate groups was no longer confirmed by FT-IR. Then, the reaction solution was transferred to a 2 L eggplant flask, and 75 g of acetone and 50 g of water were removed by vacuum distillation to obtain an aqueous polyurethane resin emulsion composition (PUD-23).

### (Example 19: Polyurethane Resin Emulsion Production 24)

46.6 g of N-980N, 3.1 g of 1,6-hexanediol, 49.7 g of PCP-3, 75 g of acetone, 5.3 g of 2,2-dimethylolpropanoic acid, and 39.5 g of isophorone diisocyanate were charged into a reactor A, heated to 60°C, and stirred at the same temperature for 30 minutes, and then 0.12 g of U-600 was added thereto, followed by reaction for 5 hours. The content of unreacted isocyanate groups at the end of urethanization was 0.523 mmol/g with respect to the above charged amount. Then, 4.0 g of triethylamine was charged to neutralize the carboxyl groups, and then 320 g of water was charged while stirring for emulsification. After the emulsification, 0.18 g of KL-245 was added, amine water (prepared by blending 30 g of water and 0.99 g of isophorone diamine) was charged within 30 minutes, and amine chain extension reaction was performed at 40°C for 12 hours. Stirring was stopped when the presence of isocyanate groups was no longer confirmed by FT-IR. Then, the reaction solution was transferred to a 2 L eggplant flask, and 75 g of acetone and 50 g of water were removed by vacuum distillation to obtain an aqueous polyurethane resin emulsion composition (PUD-24).

### (Example 20: Polyurethane Resin Emulsion Production 25)

60.0 g of N-980N, 2.2 g of 1,6-hexanediol, 41.5 g of PCP-1, 75 g of acetone, 5.3 g of 2,2-dimethylolpropanoic acid, and 34.6 g of isophorone diisocyanate were charged into a reactor A, heated to 60°C, and stirred at the same temperature for 30 minutes, and then 0.12 g of U-600 was added thereto, followed by reaction for 5 hours. The content of unreacted isocyanate groups at the end of urethanization was 0.244 mmol/g with respect to the above charged amount. Then, 4.0 g of triethylamine was charged to neutralize the carboxyl groups, and then 350 g of water was charged while stirring for emulsification. After the emulsification, 0.18 g of KL-245 was added, and amine chain extension reaction was performed at 40°C for 12 hours. Stirring was stopped when the presence of isocyanate groups was no longer confirmed by FT-IR. Then, the reaction solution was transferred to a 2 L eggplant flask, and 75 g of acetone and 50 g of water were removed by vacuum distillation to obtain an aqueous polyurethane resin emulsion composition (PUD-25).

### (Example 21: Polyurethane Resin Emulsion Production 26)

An isocyanate-terminated urethane prepolymer was obtained in a reactor A in the same manner as in Example 20. The content of unreacted isocyanate groups at the end of urethanization was 0.222 mmol/g with respect to the above charged amount. Then, 4.0 g of triethylamine was charged to neutralize the carboxyl groups, and then 320 g of water was charged while stirring for emulsification. After the emulsification, 0.18 g of KL-245 was added, amine water (prepared by blending 30 g of water and 0.83 g of isophorone diamine) was charged within 30 minutes, amine chain extension reaction was performed at 40°C for 12 hours, and the same operations as in Example 20 were performed to obtain an aqueous polyurethane resin emulsion composition (PUD-26).

### (Example 22: Polyurethane Resin Emulsion Production 27)

An isocyanate-terminated urethane prepolymer was obtained in a reactor A in the same manner as in Example 20. The content of unreacted isocyanate groups at the end of urethanization was 0.253 mmol/g with respect to the above charged amount. Then, 4.0 g of triethylamine was charged to neutralize the carboxyl groups, and then 320 g of water was charged while stirring for emulsification. After the emulsification, 0.18 g of KL-245 was added, amine water (prepared by blending 30 g of water and 1.88 g of isophorone diamine) was charged within 30 minutes, amine chain extension reaction was performed at 40°C for 12 hours, and the same operations as in Example 20 were performed to obtain an aqueous polyurethane resin emulsion composition (PUD-27).

### (Example 23: Polyurethane Resin Emulsion Production 28)

An isocyanate-terminated urethane prepolymer was obtained in a reactor A in the same manner as in Example 20. The content of unreacted isocyanate groups at the end of urethanization was 0.257 mmol/g with respect to the above charged amount. Then, 4.0 g of triethylamine was charged to neutralize the carboxyl groups, and then 320 g of water was charged while stirring for emulsification. After the emulsification, 0.18 g of KL-245 was added, amine water (prepared by blending 30 g of water and 3.83 g of isophorone diamine) was charged within 30 minutes, amine chain extension reaction was performed at 40°C for 12 hours, and the same operations as in Example 20 were performed to obtain an aqueous polyurethane resin emulsion composition (PUD-28).

### (Example 24: Polyurethane Resin Emulsion Production 29)

An isocyanate-terminated urethane prepolymer was obtained in a reactor A in the same manner as in Example 20. The content of unreacted isocyanate groups at the end of urethanization was 0.241 mmol/g with respect to the above charged amount. Then, 4.0 g of triethylamine was charged to neutralize the carboxyl groups, and then 320 g of water was charged while stirring for emulsification. After the emulsification, 0.18 g of KL-245 was added, amine water (prepared by blending 30 g of water and 4.04 g of isophorone diamine) was charged within 30 minutes, amine chain extension reaction was performed at 40°C for 12 hours, and the same operations as in Example 20 were performed to obtain an aqueous polyurethane resin emulsion composition (PUD-29).

### (Example 25: Polyurethane Resin Emulsion Production 30)

An isocyanate-terminated urethane prepolymer was obtained in a reactor A in the same manner as in Example 20. The content of unreacted isocyanate groups at the end of urethanization was 0.259 mmol/g with respect to the above charged amount. Then, 4.0 g of triethylamine was charged to neutralize the carboxyl groups, and then 320 g of water was charged while stirring for emulsification. After the emulsification, 0.18 g of KL-245 was added, amine water (prepared by blending 30 g of water and 4.83 g of isophorone diamine) was charged within 30 minutes, amine chain extension reaction was performed at 40°C for 12 hours, and the same operations as in Example 20 were performed to obtain an aqueous polyurethane resin emulsion composition (PUD-30).

### (Comparative Example 6: Polyurethane Resin Emulsion Production 31)

An isocyanate-terminated urethane prepolymer was obtained in a reactor A in the same manner as in Example 20. The content of unreacted isocyanate groups at the end of urethanization was 0.675 mmol/g with respect to the above charged amount. Then, 4.0 g of triethylamine was charged to neutralize the carboxyl groups, and then 320 g of water was charged while stirring for emulsification. After the emulsification, 0.18 g of KL-245 was added, amine water (prepared by blending 30 g of water and 1.18 g of isophorone diamine), was charged within 30 minutes, amine chain extension reaction was performed at 40°C for 12 hours, and the same operations as in Example 20 were performed to obtain an aqueous polyurethane resin emulsion composition (PUD-31).

### (Example 26: Polyurethane Resin Emulsion Production 32)

10.3 g of N-980N, 4.8 g of 1,6-hexanediol, 191.3 g of PCP-3, 150 g of acetone, 10.6 g of 2,2-dimethylolpropanoic acid, and 67.3 g of isophorone diisocyanate were charged into a reactor A, heated to 60°C, and stirred at the same temperature for 30 minutes, and then 0.24 g of U-600 was added thereto, followed by reaction for 5 hours. The content of unreacted isocyanate groups at the end of urethanization was 0.342 mmol/g with respect to the above charged amount. Then, 8.0 g of triethylamine was charged to neutralize the carboxyl groups, and then 640 g of water was charged while stirring for emulsification. After the emulsification, 0.36 g of KL-245 was added, amine water (prepared by blending 60 g of water, 4.0 g of isophorone diamine, and 3.6 g of monoethanolamine) was charged within 30 minutes, and amine chain extension reaction was performed at 40°C for 12 hours. Stirring was stopped when the presence of isocyanate groups was no longer confirmed by FT-IR. Then, the reaction solution was transferred to a 2 L eggplant flask, and 150 g of acetone and 100 g of water were removed by vacuum distillation to obtain an aqueous polyurethane resin emulsion composition (PUD-32).

### (Comparative Example 7: Polyurethane Resin Emulsion Production 33)

204.1 g of N-980N, 8.0 g of 1,6-hexanediol, 150 g of acetone, 10.9 g of 2,2-dimethylolpropanoic acid, and 69.2 g of isophorone diisocyanate were charged into a reactor A, heated to 60°C, and stirred at the same temperature for 30 minutes, and then 0.24 g of U-600 was added thereto, followed by reaction for 5 hours. The content of unreacted isocyanate groups at the end of urethanization was 0.356 mmol/g with respect to the above charged amount. Then, 8.2 g of triethylamine was charged to neutralize the carboxyl groups, and then 640 g of water was charged while stirring for emulsification. After the emulsification, 0.36 g of KL-245 was added, amine water (prepared by blending 60 g of water, 4.1 g of isophorone diamine, and 3.7 g of monoethanolamine) was charged within 30 minutes, and amine chain extension reaction was performed at 40°C for 12 hours. Stirring was stopped when the presence of isocyanate groups was no longer confirmed by FT-IR. Then, the reaction solution was transferred to a 2 L eggplant flask, and 150 g of acetone and 100 g of water were removed by vacuum distillation to obtain an aqueous polyurethane resin emulsion composition (PUD-33).

### (Comparative Example 8: Polyurethane Resin Emulsion Production 34)

206.1 g of N-980N, 6.0 g of trimethylolpropane, 150 g of acetone, 10.9 g of 2,2-dimethylolpropanoic acid, and 69.2 g of isophorone diisocyanate were charged into a reactor A, heated to 60°C, and stirred at the same temperature for 30 minutes, and then 0.24 g of U-600 was added thereto, followed by reaction for 5 hours. The content of unreacted isocyanate groups at the end of urethanization was 0.361 mmol/g with respect to the above charged amount. Then, 8.2 g of triethylamine was charged to neutralize the carboxyl groups, and then 640 g of water was charged while stirring for emulsification. After the emulsification, 0.36 g of KL-245 was added, amine water (prepared by blending 60 g of water, 4.1 g of isophorone diamine, and 3.7 g of monoethanolamine) was charged within 30 minutes, and amine chain extension reaction was performed at 40°C for 12 hours. Stirring was stopped when the presence of isocyanate groups was no longer confirmed by FT-IR. Then, the reaction solution was transferred to a 2 L eggplant flask, and 150 g of acetone and 100 g of water were removed by vacuum distillation to obtain an aqueous polyurethane resin emulsion composition (PUD-34).

The compositions of the resulting aqueous polyurethane resin emulsion compositions are shown in Tables 2 to 5. In Tables 2 to 5, the isocyanate-terminated urethane prepolymer (E) is abbreviated as "prepolymer (E)."

**[Table 2]**

| | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|
| | | | PUD-1 | PUD-2 | PUD-3 | PUD-4 | PUD-5 | PUD-6 | PUD-7 | PUD-8 | PUD-9 | PUD-10 | PUD-11 | PUD-12 |
| Blend | Polyol (A-1) | N-980N | 139.4 | 111.4 | 110.3 | 59.4 | 103.1 | 49.1 | | 101.0 | 48.1 | | 112.7 | 56.0 |
| | | PLACCEL 220 | | | | | | | | | | | | |
| | Diol (A-2) and/or Polyhydric Alcohol (A-3) | Trimethylolpropane | | | | | | | | | | | | |
| | | 1,6-Hexanediol | 6.2 | 3.0 | 4.1 | | 6.6 | 5.8 | 5.0 | 6.5 | 5.6 | 4.8 | | |
| | Polycarbonate polyol (B1) (Polyfunctional Polyol (B2)) | PCP-1 | 62.4 | 93.6 | | 145.3 | | | | | | | | |
| | | PCP-2 | | | 93.6 | | | | | | | | | |
| | | PCP-3 | | | | | 109.7 | 164.6 | 214.5 | 107.5 | 161.2 | 210.2 | 112.7 | 167.9 |
| | | PC P-4 | | | | | | | | | | | | |
| | | PC P-5 | | | | | | | | | | | | |
| | Organic Acid (C) | 2,2-Dimethylolpropanoic Acid | 10.6 | 10.6 | 10.6 | 10.6 | 10.6 | 10.6 | 10.6 | 10.6 | 10.6 | 10.6 | 10.6 | 10.6 |
| | Isocyanate (D) | Isophorone Diisocyanate | 69.3 | 69.3 | 69.3 | 72.7 | 59.9 | 59.9 | 59.9 | 62.3 | 62.3 | 62.3 | 51.8 | 53.4 |
| | NCO Content in Prepolymer (E) (mmol/g) | | 0.323 | 0.305 | 0.312 | 0.260 | 0.114 | 0.112 | 0.112 | 0.208 | 0.169 | 0.182 | 0.234 | 0.213 |
| | Neutralizing Agent (F) | Triethylamine | 8.0 | 8.0 | 8.0 | 8.0 | 8.0 | 8.0 | 8.0 | 8.0 | 8.0 | 8.0 | 8.0 | 8.0 |
| | Chain Extender (G) (Amine Compound) | Isophorone Diamine | 4.0 | 4.0 | 4.0 | 4.0 | 2.0 | 2.0 | 2.0 | 4.0 | 4.0 | 4.0 | 4.0 | 4.0 |
| | Catalyst | U-600 | 0.24 | 0.24 | 0.24 | 0.24 | 0.24 | 0.24 | 0.24 | 0.24 | 0.24 | 0.24 | 0.24 | 0.24 |
| | Defoamer | KL-245 | 0.36 | 0.36 | 0.36 | 0.36 | 0.36 | 0.36 | 0.36 | 0.36 | 0.36 | 0.36 | 0.36 | 0.36 |
| | Solvent | Acetone | 150 | 150 | 150 | 150 | 150 | 150 | 150 | 150 | 150 | 150 | 150 | 150 |
| | | Water | 700 | 700 | 700 | 700 | 700 | 700 | 700 | 700 | 700 | 700 | 700 | 700 |
| Composition | Average Hydroxyl Value of A1 (Average Hydroxyl Value of A2+B2) | (mgKOH/g) | 110 | 110 | 110 | 120 | 90 | 90 | 90 | 90 | 90 | 90 | 62 | 66 |
| | Content of B1 [B1/A1] (Content of B2 [B2/(A2+B2)]) | (mass%) | 30 | 45 | 45 | 71 | 50 | 75 | 98 | 50 | 75 | 98 | 50 | 75 |
| | Crosslinking Density | (mmol/g) | 0.15 | 0.23 | 0.23 | 0.35 | 0.06 | 0.09 | 0.11 | 0.06 | 0.08 | 0.11 | 0.06 | 0.09 |
| | Urea Group Concentration Derived from Chain Extender (G) | (mmol/g) | 0.48 | 0.46 | 0.47 | 0.39 | 0.17 | 0.17 | 0.17 | 0.31 | 0.25 | 0.27 | 0.35 | 0.32 |
| | Urea Group Concentration Derived from Amine Compound | (mmol/g) | 0.16 | 0.16 | 0.16 | 0.16 | 0.08 | 0.08 | 0.08 | 0.16 | 0.16 | 0.16 | 0.16 | 0.16 |
| | Urea Group Concentration Derived from Water | (mmol/g) | 0.32 | 0.30 | 0.31 | 0.23 | 0.09 | 0.09 | 0.09 | 0.15 | 0.09 | 0.11 | 0.19 | 0.16 |
| | Urea Group Ratio Derived from Amine Compound | (%) | 33.0 | 35.0 | 34.2 | 41.0 | 46.6 | 47.4 | 47.4 | 51.3 | 63.1 | 58.6 | 45.6 | 50.1 |

**[Table 3]**

| | | | Example 13 | Example 14 | Example 15 | Example 16 | Comparative Example 1 | Comparative Example 2 | Comparative Example 3 | Comparative Example 4 | Comparative Example 5 |
|---|---|---|---|---|---|---|---|---|---|---|---|
| | | | PUD-13 | PUD-14 | PUD-15 | PUD-16 | PUD-17 | PUD-18 | PUD-19 | PUD-20 | PUD-21 |
| Blend | Polyol (A-1) | N-980 N | 167.4 | | 50.5 | 53.0 | 206.9 | 198.2 | 193.9 | 202.3 | 203.7 |
| | | PLACCEL 220 | | 50.5 | | | | | | | |
| | Diol (A-2) and/or Polyhydric Alcohol (A-3) | Trimethylolpropane | | | | | | | | 4.3 | 8.6 |
| | | 1,6-Hexanediol | 9.4 | 3.3 | 3.3 | 0.7 | 8.2 | 7.8 | 7.6 | 7.1 | 1.4 |
| | Polycarbonate polyol (B1) (Polyfunctional Polyol (B2)) | PCP-1 | 31.2 | | | | | | | | |
| | | PCP-2 | | | | | | | | | |
| | | PCP-3 | | 53.7 | | | | | | | |
| | | PCP-4 | | | 53.7 | | | | | | |
| | | PCP-5 | | | | 53.7 | | | | | |
| | Organic Acid (C) | 2,2-Dimethylolpropanoic Acid | 10.6 | 5.3 | 5.3 | 5.3 | 10.6 | 10.6 | 10.6 | 10.9 | 10.9 |
| | Isocyanate (D) | Isophorone Diisocyanate | 69.3 | 31.2 | 31.2 | 31.2 | 62.3 | 67.2 | 69.7 | 71.2 | 71.2 |
| | NCO Content in Prepolymer (E) (mmol/g) | | 0.278 | 0.129 | 0.127 | 0.140 | 0.197 | 0.263 | 0.275 | 0.328 | 0.305 |
| | Neutralizing Agent (F) | Triethylamine | 8.0 | 4.0 | 4.0 | 4.0 | 8.0 | 8.0 | 8.0 | 8.0 | 8.0 |
| | Chain Extender (G) (Amine Compound) | Isophorone Diamine | 4.0 | 2.0 | 2.0 | 2.0 | 4.0 | 8.0 | 9.9 | 4.1 | 4.1 |
| | Catalyst | U-600 | 0.24 | 0.12 | 0.12 | 0.12 | 0.24 | 0.24 | 0.24 | 0.24 | 0.24 |
| | Defoamer | KL-245 | 0.36 | 0.18 | 0.18 | 0.18 | 0.36 | 0.36 | 0.36 | 0.36 | 0.36 |
| | Solvent | Acetone | 150 | 75 | 75 | 75 | 150 | 150 | 150 | 150 | 150 |
| | | Water | 700 | 350 | 350 | 350 | 700 | 700 | 700 | 700 | 700 |
| Composition | Average Hydroxyl Value of A1 (Average Hydroxyl Value of A2+B2) | (mgKOH/g) | 110 | 90 | 90 | 90 | 90 | 90 | 90 | 90 | 90 |
| | Content of B1 [B1/A1] (Content of B2 [B2/(A2+B2)] ) | (mass%) | 15 | 50 | 50 | 50 | 0 | 0 | 0 | 0 | 0 |
| | Crosslinking Density | (mmol/g) | 0.08 | 0.06 | 0.09 | 0.32 | 0 | 0 | 0 | 0.10 | 0.21 |
| | Urea Group Concentration Derived from Chain Extender (G) | (mmol/g) | 0.42 | 0.19 | 0.19 | 0.21 | 0.30 | 0.39 | 0.41 | 0.49 | 0.45 |
| | Urea Group Concentration Derived from Amine Compound | (mmol/g) | 0.16 | 0.16 | 0.16 | 0.16 | 0.16 | 0.32 | 0.40 | 0.16 | 0.16 |
| | Urea Group Concentration Derived from Water | (mmol/g) | 0.26 | 0.03 | 0.03 | 0.05 | 0.14 | 0.07 | 0.01 | 0.33 | 0.29 |
| | Urea Group Ratio Derived from Amine Compound | (%) | 38.4 | 82.9 | 84.2 | 76.2 | 54.1 | 81.9 | 98.3 | 32.8 | 35.3 |

**[Table 4]**

| | | | Example 17 | Example 18 | Example 19 | Example 20 | Example 21 | Example 22 | Example 23 | Example 24 | Example 25 | Comparative Example 6 |
|---|---|---|---|---|---|---|---|---|---|---|---|---|
| | | | PUD-22 | PUD-23 | PUD-24 | PUD-25 | PUD-26 | PUD-27 | PUD-28 | PUD-29 | PUD-30 | PUD-31 |
| Blend | Polyol (A-1) | N-980N | 48.8 | 48.1 | 46.6 | 60.0 | 60.0 | 60.0 | 60.0 | 60.0 | 60.0 | 60.0 |
| | | PLACCEL 220 | | | | | | | | | | |
| | Diol (A-2) and/or Polyhydric Alcohol (A-3) | Trimethylolpropane | | | | | | | | | | |
| | | 1,6-Hexanediol | 3.2 | 3.2 | 3.1 | 2.2 | 2.2 | 2.2 | 2.2 | 2.2 | 2.2 | 2.2 |
| | Polycarbonate polyol (B1) (Polyfunctional Polyol (B2)) | PCP-1 | | | | 41.5 | 41.5 | 41.5 | 41.5 | 41.5 | 41.5 | 41.5 |
| | | PCP-2 | | | | | | | | | | |
| | | PCP-3 | 52.0 | 51.2 | 49.7 | | | | | | | |
| | | PCP-4 | | | | | | | | | | |
| | | PC P-5 | | | | | | | | | | |
| | Organic Acid (C) | 2,2-Dimethylolpropanoic Acid | 5.3 | 5.3 | 5.3 | 5.3 | 5.3 | 5.3 | 5.3 | 5.3 | 5.3 | 5.3 |
| | Isocyanate (D) | Isophorone Diisocyanate | 35.4 | 36.8 | 39.5 | 34.6 | 34.6 | 34.6 | 34.6 | 34.6 | 34.6 | 34.6 |
| | NCO Content in Prepolymer (E) (mmol/g) | | 0.374 | 0.423 | 0.523 | 0.244 | 0.222 | 0.253 | 0.257 | 0.241 | 0.259 | 0.675 |
| | Neutralizing Agent (F) | Triethylamine | 4.0 | 4.0 | 4.0 | 4.0 | 4.0 | 4.0 | 4.0 | 4.0 | 4.0 | 4.0 |
| | Chain Extender (G) (Amine Compound) | Isophorone Diamine | 0.62 | 0.75 | 0.99 | 0 | 0.83 | 1.88 | 3.83 | 4.04 | 4.83 | 1.18 |
| | Catalyst | U-600 | 0.12 | 0.12 | 0.12 | 0.12 | 0.12 | 0.12 | 0.12 | 0.12 | 0.12 | 0.12 |
| | Defoam er | KL-245 | 0.18 | 0.18 | 0.18 | 0.18 | 0.18 | 0.18 | 0.18 | 0.18 | 0.18 | 0.18 |
| | Solvent | Acetone | 75 | 75 | 75 | 75 | 75 | 75 | 75 | 75 | 75 | 75 |
| | | Water | 350 | 350 | 350 | 350 | 350 | 350 | 350 | 350 | 350 | 350 |
| Composition | Average Hydroxyl Value of A1 (Average Hydroxyl Value of A2+B2) | (mgKOH/g) | 90 | 90 | 90 | 110 | 110 | 110 | 110 | 110 | 110 | 110 |
| | Content of B1 [B1/A1] (Content of B2 [B2/(A2+B2)] ) | (mass%) | 50 | 50 | 50 | 40 | 40 | 40 | 40 | 40 | 40 | 40 |
| | Crosslinking Density | (mmollq) | 0.06 | 0.06 | 0.06 | 0.21 | 0.21 | 0.21 | 0.21 | 0.21 | 0.21 | 0.21 |
| | Urea Group Concentration Derived from Chain Extender (G) | (mmol/g) | 0.57 | 0.64 | 0.79 | 0.37 | 0.34 | 0.38 | 0.38 | 0.36 | 0.38 | 1.02 |
| | Urea Group Concentration Derived from Amine Compound | (mmol/g) | 0.05 | 0.06 | 0.08 | 0 | 0.07 | 0.15 | 0.31 | 0.32 | 0.38 | 0.10 |
| | Urea Group Concentration Derived from Water | (mmol/g) | 0.51 | 0.58 | 0.71 | 0.37 | 0.27 | 0.23 | 0.08 | 0.03 | 0 | 0.92 |
| | Urea Group Ratio Derived from Amine Compound | (%) | 8.9 | 9.4 | 10.2 | 0 | 20.0 | 40.0 | 80.0 | 90.2 | 100 | 9.4 |

**[Table 5]**

| | | | Example 26 | Comparative Example 7 | Comparative Example 8 |
|---|---|---|---|---|---|
| | | | PUD-32 | PUD-33 | PUD-34 |
| Blend | Polyol (A-1) | N-980N | 10.3 | 204.1 | 206.1 |
| | Diol (A-2) and/or Polyhydric Alcohol (A-3) | Trimethylolpropane | | | 6.0 |
| | | 1,6-Hexanediol | 4.8 | 8.0 | |
| | Polycarbonate Polyol (B1) (Polyfunctional Polyol (B2)) | PCP-3 | 191.3 | | |
| | Organic Acid (C) | 2,2-Dimethylolpropanoic Acid | 10.6 | 10.9 | 10.9 |
| | Isocyanate (D) | Isophorone Diisocyanate | 67.3 | 69.2 | 69.2 |
| | NCO Content in Prepolymer (E) (mmol/g) | | 0.342 | 0.356 | 0.361 |
| | Neutralizing Agent (F) | Triethylamine | 8.0 | 8.2 | 8.2 |
| | Chain Extender (G) (Amine Compound) | Isophorone Diamine | 4.0 | 4.1 | 4.1 |
| | | Monoethanolamine | 3.6 | 3.7 | 3.7 |
| | Catalyst | U-600 | 0.24 | 0.24 | 0.24 |
| | Defoamer | KL-245 | 0.36 | 0.36 | 0.36 |
| | Solvent | Acetone | 150 | 150 | 150 |
| | | Water | 700 | 700 | 700 |
| Composition | Average Hydroxyl Value of A1 (Average Hydroxyl Value of A2+B2) | (mgKOH/g) | 90 | 90 | 90 |
| | Content of B1 [B1/A1] (Content of B2 [B2/(A2+B2)] ) | (mass%) | 93 | 0 | 0 |
| | Crosslinking Density | (mmol/g) | 0.14 | 0 | 0.15 |
| | Urea Group Concentration Derived from Chain Extender (G) | (mmol/g) | 0.51 | 0.52 | 0.53 |
| | Urea Group Concentration Derived from Amine Compound | (mmol/g) | 0.36 | 0.36 | 0.36 |
| | Urea Group Concentration Derived from Water | (mmol/g) | 0.15 | 0.16 | 0.17 |
| | Urea Group Ratio Derived from Amine Compound | (%) | 70.8 | 68.6 | 67.7 |

| | | | | | |
|---|---|---|---|---|---|
| • Trimethylolpropane: manufactured by Sigma-Aldrich Co. LLC. • 1,6-hexanedio: manufactured by BASF-JAPAN Ltd. • 2,2-Dimethylolpropanoic acid: manufactured by Tokyo Chemical Industry Co., Ltd. • Isophorone diisocyanate: manufactured by Evonik Industries AG • Acetone: manufactured by KH Neochem Co., Ltd. • Triethylamine: manufactured by Kishida Chemical Co., Ltd. • Isophorone diamine: manufactured by Tokyo Chemical Industry Co., Ltd. • Monoethanolamine: manufactured by FUJIFILM Wako Pure Chemical Corporation • Monoethanolamine: manufactured by FUJIFILM Wako Pure Chemical Corporation • Neostann U-600: manufactured by Nitto Kasei Co., Ltd. • KL-245: manufactured by Evonik Industries AG • Water: city water | | | | | |

### <Method for Producing Film for Tensile Properties Test>

14.0 parts of dipropylene glycol dimethyl ether was added to 100 parts of each of the PUD-1 to PUD-31 aqueous polyurethane resin emulsion compositions obtained in Examples 1 to 25 and Comparative Examples 1 to 6, and mixed to obtain a main agent. The main agent was applied so that the dry film thickness was about 100 µm, and dried at 25°C for 2 days and at 80°C for 2 hours to produce a cured product. The cured product was used for evaluating physical properties. The results are shown in Tables 6 to 8.

### [Evaluation Tests]

### [Tensile Properties]

The tensile properties of the resulting cured product were measured according to JIS K6251 (100% modulus, strength at break, elongation at break).
- Testing device: Tensilon UTA-500 (manufactured by A&D Company, Limited)
- Measurement conditions: 25°C × 50% RH
- Head speed: 200 mm/min
- Dumbbell No. 4

### [Softening Temperature]

A test piece was obtained from the resulting film using a dumbbell, and a 2 cm reference line was marked on the test piece, and the thickness of the center of the reference line was measured. A weight of a predetermined weight was attached to one grip portion of the test piece, the other grip portion was sandwiched with a double clip, the test piece was hung in a dryer with the clip facing upward, the temperature inside the dryer was increased, the distance between the reference lines was observed, and the temperature when the distance between the reference lines became 4 cm was read as the softening temperature.
- Processing device: Blowing Constant Temperature Dryer DRK633DA (manufactured by Advantec Toyo Kaisha, Ltd.)
- Weight: thickness of center of reference line (µm) × 0.05 g
- Dumbbell No. 2 (according to JIS K6251)
- Heating rate: 5°C/min

### [Evaluation Criteria: One-Component Type]

Each physical property value of 100% modulus, strength at break, elongation at break, and softening temperature was evaluated as A, B, C, and D (A: very good, B: good, C: fair, D: poor). Furthermore, the overall evaluation was evaluated as A, B, and D (A: very good, B: good, D: poor).

### <100% Modulus>

A: 2.7 MPa or more and 4.5 MPa or less
B: less than 2.7 MPa, or more than 4.5 MPa and less than 5.0 MPa
D: 5.0 MPa or more

### <Strength at Break>

A: 35 MPa or more
C: less than 35 MPa

### <Elongation at Break>

A: 350 MPa or more
C: less than 350 MPa

### <Softening Temperature>

A: 120°C or more
B: less than 120°C and 85°C or more
D: less than 85°C

### <Overall Evaluation>

A: Evaluation of each physical property value is only A
B: Evaluation of each physical property value does not include D and includes at least one B or C
D: Evaluation of each physical property value includes D

**[Table 6]**

| | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|
| | | PUD-1 | PUD-2 | PUD-3 | PUD-4 | PUD-5 | P UD-6 | PUD-7 | PUD-8 | PUD-9 | PUD-10 | PUD-11 | PUD-12 |
| 100% Modulus | MPa | 3.6 A | 3.4 A | 3.5 A | 3.6 A | 2.2 B | 1.9 B | 1.6 B | 2.9 A | 2.9 A | 2.8 A | 2.2 B | 1.8 B |
| Strength at Break | MPa | 37.3 A | 35.9 A | 36.6 A | 41.0 A | 40.0 A | 41.9 A | 38.5 A | 35.6 A | 48.3 A | 48.8 A | 33.0 C | 33.0 C |
| Elongation at Break | % | 510 A | 480 A | 490 A | 350 A | 470 A | 500 A | 530 A | 510 A | 450 A | 470 A | 540 A | 590 A |
| Softening Temperature | °C | 110 B | 145 A | 148 A | 218 A | 157 A | 200 A | 202 A | 115 B | 200 A | 210 A | 112 B | 142 A |
| Overall Evaluation | | B | A | A | A | B | B | B | B | A | A | B | B |

**[Table 7]**

| | | Example 13 | Example 14 | Example 15 | Example 16 | Comparative Example 1 | Comparative Example 2 | Comparative Example 3 | Comparative Example 4 | Comparative Example 5 |
|---|---|---|---|---|---|---|---|---|---|---|
| | | PUD-13 | PUD-14 | PUD-15 | PUD-16 | PUD-17 | PUD-18 | PUD-19 | PUD-20 | PUD-21 |
| 100% Modulus | MPa | 3.8 A | 1.4 B | 1.9 B | 3.8 A | 3.3 A | 5.1 D | 7.6 D | 5.2 D | 6.2 D |
| Strength at Break | MPa | 29.5 C | 18.8 C | 48.6 A | 56.5 A | 48.1 A | 57.6 A | 74.4 A | 45.7 A | 52.8 A |
| Elongation at Break | % | 480 A | 723 A | 565 A | 467 A | 530 A | 450 A | 440 A | 460 A | 430 A |
| Softening Temperature | °C | 87 B | 92 B | 199 A | 219 A | 82 D | 118 B | 141 A | 113 A | 165 A |
| Overall Evaluation | | B | B | B | A | D | D | D | D | D |

**[Table 8]**

| | | Example 17 | Example 18 | Example 19 | Example 20 | Example 21 | Example 22 | Example 23 | Example 24 | Example 25 | Comparative Example 6 |
|---|---|---|---|---|---|---|---|---|---|---|---|
| | | PUD-22 | PUD-23 | PUD-24 | PUD-25 | PUD-26 | PUD-27 | PUD-28 | PUD-29 | PUD-30 | PUD-31 |
| 100% Modulus | MPa | 2.9 A | 3.8 A | 4.9 B | 2.6 B | 3.0 A | 3.2 A | 4.0 A | 4.5 A | 4.6 B | 15.1 D |
| Strength at Break | MPa | 60.3 A | 57.8 A | 59.4 A | 51.0 A | 60.5 A | 49.7 A | 38.9 A | 31.6 C | 33.0 C | 60.1 A |
| Elongation at Break | % | 370 A | 357 A | 307 C | 452 A | 465 A | 467 A | 478 A | 382 A | 448 A | 263 C |
| Softening Temperature | °C | 156 A | 152 A | 153 A | 210 A | 213 A | 198 A | 120 A | 123 A | 106 B | 234 A |
| Overall Evaluation | | A | A | B | B | A | A | A | B | B | D |

Further, PUD-32 to PUD-34, which are polyol components obtained in Example 26 and Comparative Examples 7 and 8, a curing agent (X) which is a polyisocynate component, and a film-forming aid were each charged into a 200 ml glass bottle in the blending amounts shown in Table 9, and mixed to obtain a blending liquid. The blending liquid was applied onto a release paper so that the dry film thickness was about 100 µm, and dried at 25°C for 2 days and at 80°C for 2 hours to produce a cured product. The cured product was used for evaluating physical properties. The results are shown in Table 9. The charging unit in the table is gram.
- Dipropylene glycol dimethyl ether: manufactured by FUJIFILM Wako Pure Chemical Corporation
- Aquanate 200: manufactured by Tosoh Corporation (nonionic water-dispersible polyisocyanate, NCO content = 11.9%)

### [Evaluation Criteria: Two-Component Type]

Each physical property value of 100% modulus, strength at break, elongation at break, and softening temperature was evaluated as A, B, C, and D (A: very good, B: good, C: fair, D: poor). Furthermore, the overall evaluation was evaluated as A, B, and D (A: very good, B: good, D: poor).

### <100% Modulus>

A: 2.0 MPa or more and 3.5 MPa or less
B: less than 2.0 MPa, or more than 3.5 MPa and less than 4.0 MPa
D: 4.0 MPa or more

### <Strength at Break>

A: 30 MPa or more
C: less than 30 MPa

### <Elongation at Break>

A: 300 MPa or more
C: less than 300 MPa

### <Softening Temperature>

A: 190°C or more
D: less than 190°C

### <Overall Evaluation>

A: Evaluation of each physical property value is only A
B: Evaluation of each physical property value does not include D and includes at least one B or C
D: Evaluation of each physical property value includes D

**[Table 9]**

| | | | Example 26-1 | Example 26-2 | Comparative Example 7-1 | Comparative Example 7-2 | Comparative Example 8-1 | Comparative Example 8-2 |
|---|---|---|---|---|---|---|---|---|
| Polyol Component | | | | | | | | |
| | PUD-32 | | 100 | 100 | | | | |
| | PUD-33 | | | | 100 | 100 | | |
| | PUD-34 | | | | | | 100 | 100 |
| Polyisocyanate Component | | | | | | | | |
| | Aquanate 200 | | 5 | 10 | 5 | 10 | 5 | 10 |
| Film-Forming Aid | | | | | | | | |
| | Dipropylene Glycol Dimethyl Ether | | 14 | 14 | 14 | 14 | 14 | 14 |
| Total | | | 119 | 124 | 119 | 124 | 119 | 124 |
| 100% Modulus | | MPa | 3.2 A | 3.5 A | 4.4 D | 4.1 D | 6.7 D | 7.1 D |
| Strength at Break | | MPa | 30.5 A | 33.4 A | 29.0 C | 37.7 A | 42.5 A | 32.0 A |
| Elongation at Break | | % | 450 A | 300 A | 400 A | 400 A | 308 A | 200 C |
| Softening Temperature | | °C | 199 A | 224 A | 96 D | 185 D | 213 A | 223 A |
| Overall Evaluation | | | B | A | D | D | D | D |

## Claims

1. A polyurethane resin composition comprising:
a reaction product of an isocyanate-terminated urethane prepolymer (E) and a chain extender (G); and
a neutralizing agent (F), wherein
the isocyanate-terminated urethane prepolymer (E) includes
a reaction product of:
a polyol (A1) including a polycarbonate polyol (B1) having an ester bond and an average hydroxyl group functionality of more than 2;
an organic acid (C); and
a polyisocyanate (D), or
a reaction product of:
a polyol (A2);
a polyfunctional polyol (B2) different from the polyol (A2);
an organic acid (C); and
a polyisocyanate (D),
the polyfunctional polyol (B2) being a polycarbonate polyol having an ester bond and an average hydroxyl group functionality of more than 2, and wherein
in the polyurethane resin composition, a content of urea groups derived from the chain extender (G) is 0.05 to 1.00 mmol/g with respect to a total sum of a mass of the isocyanate-terminated urethane prepolymer (E) and a mass of the chain extender (G).

2. The polyurethane resin composition according to claim 1, wherein the polyurethane resin composition contains:
a reaction product of an isocyanate-terminated urethane prepolymer (E) and a chain extender (G); and
a neutralizing agent (F), wherein
the isocyanate-terminated urethane prepolymer (E) includes
a reaction product of:
a polyol (A2);
a polyfunctional polyol (B2) different from the polyol (A2);
an organic acid (C); and
a polyisocyanate (D),
the polyfunctional polyol (B2) being a polycarbonate polyol having an ester bond and an average hydroxyl group functionality of more than 2, and wherein
in the polyurethane resin composition, the content of the urea groups derived from the chain extender (G) is 0.05 to 1.00 mmol/g with respect to the total sum of the mass of the isocyanate-terminated urethane prepolymer (E) and the mass of the chain extender (G).

3. The polyurethane resin composition according to claim 1 or 2, wherein the chain extender (G) is one or more selected from the group consisting of: an amine compound having one or more primary or secondary amino groups; and water.

4. The polyurethane resin composition according to any one of claims 1 to 3, wherein the chain extender (G) includes an amine compound having one or more primary or secondary amino groups, and wherein in the polyurethane resin composition, a content of urea groups derived from the amine compound is more than 0 mmol/g and 0.95 mmol/g or less with respect to the total sum of the mass of the isocyanate-terminated urethane prepolymer (E) and the mass of the chain extender (G).

5. The polyurethane resin composition according to any one of claims 1 to 4, wherein the chain extender (G) includes an amine compound having one or more primary or secondary amino groups, and wherein in the polyurethane resin composition, the content of the urea groups derived from the amine compound is more than 0 mol% and 99 mol% or less with respect to the content of the urea groups derived from the chain extender (G).

6. The polyurethane resin composition according to any one of claims 1 to 5, wherein the chain extender (G) includes water, and wherein in the polyurethane resin composition, a content of urea groups derived from the water is more than 0 mmol/g and 0.95 mmol/g or less with respect to the total sum of the mass of the isocyanate-terminated urethane prepolymer (E) and the mass of the chain extender (G).

7. The polyurethane resin composition according to any one of claims 1 to 6, further comprising a curing agent (X) .

8. The polyurethane resin composition according to any one of claims 1 to 7, wherein a content of the polycarbonate polyol (B1) is 5 to 99 mass% with respect to a content of the polyol (A1), or a content of the polyfunctional polyol (B2) is 5 to 99 mass% with respect to a total sum of a content of the polyol (A2) and the content of the polyfunctional polyol (B2).

9. A polyurethane resin composition comprising:
an isocyanate-terminated urethane prepolymer (E); and
a neutralizing agent (F), wherein
the isocyanate-terminated urethane prepolymer (E) includes
a reaction product of:
a polyol (A1) including a polycarbonate polyol (B1) having an ester bond and an average hydroxyl group functionality of more than 2;
an organic acid (C); and
a polyisocyanate (D), or
a reaction product of:
a polyol (A2);
a polyfunctional polyol (B2) different from the polyol (A2);
an organic acid (C); and
a polyisocyanate (D),
the polyfunctional polyol (B2) being a polycarbonate polyol having an ester bond and an average hydroxyl group functionality of more than 2, and wherein
a content of the polycarbonate polyol (B1) is 40 to 99 mass% with respect to a content of the polyol (A1).

10. The polyurethane resin composition according to claim 9, wherein the polyurethane resin composition contains:
an isocyanate-terminated urethane prepolymer (E); and
a neutralizing agent (F), wherein
the isocyanate-terminated urethane prepolymer (E) includes
a reaction product of:
a polyol (A2);
a polyfunctional polyol (B2) different from the polyol (A2);
an organic acid (C); and
a polyisocyanate (D),
the polyfunctional polyol (B2) being a polycarbonate polyol having an ester bond and an average hydroxyl group functionality of more than 2, and wherein
a content of the polyfunctional polyol (B2) is 40 to 99 mass% with respect to a total sum of a content of the polyol (A2) and the content of the polyfunctional polyol (B2) .

11. The polyurethane resin composition according to any one of claims 1 to 10, wherein an average hydroxyl value of the polyol (A1) including the polycarbonate polyol (B1) is 30 to 150 mgKOH/g, or an average hydroxyl value of the polyol (A2) and the polyfunctional polyol (B2) is 30 to 150 mgKOH/g.

12. The polyurethane resin composition according to any one of claims 1 to 11, wherein the polycarbonate polyol (B1) or the polyfunctional polyol (B2) includes a transesterification reaction product of: a polycarbonate polyol (b-1); and a polyester polyol (b-2) having an average hydroxyl group functionality of 3 or more, or includes a transesterification reaction product of: a polycarbonate polyol (b-1); a polyester polyol (b-2) having an average hydroxyl group functionality of 3 or more; and a polyester polyol (b-3) having an average hydroxyl group functionality of 2 or more and less than 3.

13. The polyurethane resin composition according to claim 12, wherein an average hydroxyl group functionality of the polycarbonate polyol (B1) or the polyfunctional polyol (B2) is 2.1 to 3.5; a hydroxyl value of the polycarbonate polyol (B1) or the polyfunctional polyol (B2) is 40 to 500 mgKOH/g; a number average molecular weight of the polycarbonate polyol (B1) or the polyfunctional polyol (B2) is 400 to 4,000 g/mol ; and a mass ratio of the polycarbonate polyol (b-1) to the polyester polyol (b-2) ([mass of (b-1)]/[mass of (b-2)]) is 90/10 to 10/90, or a mass ratio of the polycarbonate polyol (b-1) to a total sum of the polyester polyol (b-2) and the polyester polyol (b-3) ([mass of (b-1)]/([mass of (b-2)]+[mass of (b-3)])) is 95/5 to 5/95.

14. The polyurethane resin composition according to any one of claims 1 to 13, wherein an ester group concentration of the polycarbonate polyol (B1) or the polyfunctional polyol (B2) is 10 to 90 mass%.

15. The polyurethane resin composition according to any one of claims 1 to 14, wherein the organic acid (C) is a dimethylol fatty acid.

16. The polyurethane resin composition according to any one of claims 1 to 15, wherein the neutralizing agent (F) is a basic neutralizing agent.

17. The polyurethane resin composition according to any one of claims 1 to 16, wherein the polyol (A1) includes a diol (A-2) and/or a polyhydric alcohol (A-3) having a functionality of 3 or more, or the polyol (A2) includes a diol (A-2) and/or a polyhydric alcohol (A-3) having a functionality of 3 or more.

18. A cured product obtained by curing the polyurethane resin composition according to any one of claims 1 to 17.

19. Artificial leather or synthetic leather comprising the cured product according to claim 18.

20. A surface treatment agent for leather comprising the polyurethane resin composition according to any one of claims 1 to 17.
